# EUROPEAN PATENT APPLICATION

(11) **EP 3 944 016 A1**
(43) Date of publication of application: **26.01.2022**
(21) Application number: 20774597.7
(22) Date of filing: 06.01.2020
(51) Int. Cl.: G03B 17/02, G03B 17/18, G03B 17/38, H04N 5/232

(54) **INFORMATION-PROCESSING DEVICE AND INFORMATION-PROCESSING SYSTEM**

(30) Priority: 20.03.2019 JP 2019053146
(71) Applicant: Sony Group Corporation, Tokyo 108-0075 (JP)
(72) Inventor: TABATA, Hiroaki, Tokyo 108-0075 (JP)
(74) Representative: D Young & Co LLP
(86) International application number: PCT/JP2020/000016
(87) International publication number: WO 2020/188952

(57) **Abstract**

An information processing apparatus is provided including: a control unit configured to execute a function that is related to an imaging device and associated in advance, on the basis of imaging status information including fixation and separation information and on the basis of an operation on an operation device. The operation device is in a state of either a fixed state of being fixed to the imaging device or a separated state of being separated from the imaging device, and the fixation and separation information indicates whether the operation device is in the fixed state or the separated state.

## Description

### TECHNICAL FIELD

The present disclosure relates to an information processing apparatus and an information processing system.

### BACKGROUND ART

In recent years, in an imaging device that captures an image of a subject and generates image data, a technology for appropriately changing assignment of functions of operating members has been developed. For example, Patent Document 1 discloses a technology for changing assignment of functions of operating members such that operability is maintained in accordance with a position of the imaging device.

### CITATION LIST

### PATENT DOCUMENT

Patent Document 1: Japanese Patent Application Laid-Open No. 2008-242212

### SUMMARY OF THE INVENTION

### PROBLEMS TO BE SOLVED BY THE INVENTION

Meanwhile, image capturing using an imaging device can be performed in various situations. Installation of an operating member at a predetermined spot on the imaging device may make it difficult to maintain operability depending on a situation. Furthermore, an operating member for execution of a function desired by a user is not always installed in a spot where the imaging device can be easily operated.

### SOLUTIONS TO PROBLEMS

According to the present disclosure, there is provided an information processing apparatus including: a control unit configured to execute a function that is related to an imaging device and associated in advance, on the basis of imaging status information including fixation and separation information and on the basis of an operation on an operation device. The operation device is in a state of either a fixed state of being fixed to the imaging device or a separated state of being separated from the imaging device, and the fixation and separation information indicates whether the operation device is in the fixed state or the separated state.

Furthermore, according to the present disclosure, there is provided an information processing system including: a control unit configured to execute a function that is related to an imaging device and associated in advance, on the basis of imaging status information including a fixation and separation state and on the basis of an operation on an operation device; a notification unit configured to notify a user of execution of a function related to the imaging device, the execution being made by the imaging device; and a fixation and separation discrimination unit configured to determine whether the operation device is in a fixed state of being fixed to the imaging device or a separated state of being separated from the imaging device. The operation device is in a state of either the fixed state or the separated state.

### BRIEF DESCRIPTION OF DRAWINGS

Fig. 1 is a view for explaining an outline of a system 1 according to an embodiment of the present disclosure.
Fig. 2 is a view for explaining an outline of the system 1 according to the embodiment of the present disclosure.
Fig. 3 is a view for explaining an outline of the system 1 according to the embodiment of the present disclosure.
Fig. 4 is a view showing an appearance example of an imaging device 10 according to the present embodiment. The imaging device 10 is an example of an information processing apparatus capable of generating a desired captured image, and the like.
Fig. 5 is a view showing an appearance example of an operation device 20 according to the same embodiment. The operation device 20 is an example of an information processing apparatus configured to cause the imaging device 10 to execute a predetermined function.
Fig. 6 is a view for explaining a state in which the operation device 20 is fixed to the imaging device 10, according to the same embodiment.
Fig. 7 is a view for explaining a state in which the operation device 20 is fixed to the imaging device 10, according to the same embodiment.
Fig. 8 is a diagram for explaining an example of a functional configuration of the imaging device 10 according to the same embodiment.
Fig. 9 is a diagram for explaining an example of a functional configuration of the operation device 20 according to the same embodiment.
Fig. 10 is a view for explaining an example of setting a combination of a function execution condition and a corresponding function related to the imaging device 10, according to the same embodiment.
Fig. 11A is a view for explaining an example of a condition designated as a function execution condition according to the same embodiment.
Fig. 11B is a view for explaining an example of a condition designated as a function execution condition according to the same embodiment.
Fig. 12A is a view for explaining an example of a display screen related to a setting of a function execution condition by an output unit 160 of the imaging device 10 according to the same embodiment.
Fig. 12B is a view for explaining an example of a display screen related to a setting of a function execution condition by the output unit 160 of the imaging device 10 according to the same embodiment.
Fig. 13 is a view for explaining an example of a display screen related to a setting of a function execution condition by the output unit 160 of the imaging device 10 according to the same embodiment.
Fig. 14 is a view for explaining an example of a display screen related to a setting of a function execution condition by the output unit 160 of the imaging device 10 according to the same embodiment.
Fig. 15 is a view for explaining an example of a display screen related to a setting of a function execution condition by the output unit 160 of the imaging device 10 according to the same embodiment.
Fig. 16 is a view for explaining a specific example of execution control, by a control unit 150, of a function related to the imaging device 10 and according to an operation on the operation device 20, according to the same embodiment.
Fig. 17 is a view for explaining a specific example of execution control, by the control unit 150, of a function related to the imaging device 10 and according to an operation on the operation device 20, according to the same embodiment.
Fig. 18 is a view for explaining a specific example of execution control, by the control unit 150, of a function related to the imaging device 10 and according to an operation on the operation device 20, according to the same embodiment.
Fig. 19 is a view for explaining an example of an action flow when communication is first performed between the imaging device 10 and the operation device 20 according to the same embodiment.
Fig. 20 is a flowchart for explaining an example of an action flow by a fixation and separation determination unit 260 and a communication unit 250 of the operation device 20 according to the same embodiment.
Fig. 21A is a view for explaining an example of an action flow of fingerprint information registration by the imaging device 10 and the operation device 20 according to the same embodiment.
Fig. 21B is a view for explaining an example of an action flow of fingerprint information registration by the imaging device 10 and the operation device 20 according to the same embodiment.
Fig. 22 is a flowchart for explaining an example of an action flow of registration, by the control unit 150, of a combination of a function execution condition and a corresponding function according to the same embodiment.
Fig. 23A is a view for explaining execution control of a function related to the imaging device 10, by the imaging device 10 and the operation device 20, in a case where the operation device 20 is in a fixed state, according to the same embodiment.
Fig. 23B is a view for explaining execution control of a function related to the imaging device 10, by the imaging device 10 and the operation device 20, in a case where the operation device 20 is in the fixed state, according to the same embodiment.
Fig. 23C is a view for explaining execution control of a function related to the imaging device 10, by the imaging device 10 and the operation device 20, in a case where the operation device 20 is in the fixed state, according to the same embodiment.
Fig. 23D is a view for explaining execution control of a function related to the imaging device 10, by the imaging device 10 and the operation device 20, in a case where the operation device 20 is in a separated state, according to the same embodiment.
Fig. 24A is a view for explaining execution control of a function related to the imaging device 10, by the imaging device 10 and the operation device 20, in a case where the operation device 20 is in the separated state, according to the same embodiment.
Fig. 24B is a view for explaining execution control of a function related to the imaging device 10, by the imaging device 10 and the operation device 20, in a case where the operation device 20 is in the separated state, according to the same embodiment.
Fig. 24C is a view for explaining execution control of a function related to the imaging device 10, by the imaging device 10 and the operation device 20, in a case where the operation device 20 is in the separated state, according to the same embodiment.
Fig. 24D is a view for explaining execution control of a function related to the imaging device 10, by the imaging device 10 and the operation device 20, in a case where the operation device 20 is in the separated state, according to the same embodiment.
Fig. 25 is a flowchart for explaining an example of an action flow of state determination of the operation device 20 in function specification according to the same embodiment.
Fig. 26 is a flowchart for explaining an example of an action flow of a determination process for a fixed location of the operation device 20 on the imaging device 10 by a fixed location determination unit 180 according to the same embodiment.
Fig. 27 is a flowchart for explaining an example of an action flow of a fingerprint information confirmation process by the control unit 150 according to the same embodiment.
Fig. 28 is a flowchart for explaining an action flow of receiving, by the control unit 150, an input operation on an input unit 210 of the operation device 20 according to the same embodiment.
Fig. 29 is a flowchart for explaining an example of an action flow of executing, by the control unit 150, a function related to the imaging device 10 based on imaging status information according to the same embodiment.
Fig. 30 is a view for explaining an outline of a first application example according to the present disclosure.
Fig. 31A is a view for explaining an outline of a second application example according to the present disclosure.
Fig. 31B is a view for explaining an outline of the second application example according to the present disclosure.
Fig. 32 is a block diagram showing a hardware configuration example of the imaging device 10 and the operation device 20 according to an embodiment of the present disclosure.

### MODE FOR CARRYING OUT THE INVENTION

Hereinafter, a preferred embodiment of the present disclosure will be described in detail with reference to the accompanying drawings. Note that, in the present specification and the drawings, components having substantially the same functional configuration are denoted by the same reference numerals, and redundant explanations are omitted.

Note that the description will be made in the following order.
1. Background
2. Embodiment
2.1. Outline of system 1
2.2. Functional configuration example
2.2.1. Functional configuration example of imaging device 10
2.2.2. Functional configuration example of operation device 20
2.3. Setting example
2.4. Display screen example
2.5. Specific example
3. Action example
3.1. Authentication action example
3.2. Registration action example
3.3. Function execution action example
4. Application example
4.1. Application example 1
4.2. Application example 2
5. Hardware configuration example
6. Conclusion

### <1. Background>

In recent years, in an imaging device that captures an image of a subject and generates image data, a technology for appropriately changing assignment of functions of operating members has been developed. As described above, for example, Patent Document 1 discloses a technology for changing assignment of functions of operating members such that operability is maintained in accordance with a position of the imaging device. This technology enables, for example, assignment and the like of a function to an operating member so as to enable operation by a hand gripping the imaging device even in a case where the imaging device is in any position.

Meanwhile, the imaging device can be used in various situations. Therefore, installation of an operating member at a predetermined spot on the imaging device may make it difficult to maintain operability depending on a situation. For example, depending on a position of the imaging device, the operating member may not be present at a location desired by a user. Furthermore, for example, in a case of operating a plurality of imaging devices at the same time, it is necessary to operate operating members installed in the respective imaging devices at the same time.

Furthermore, a combination of functions assigned to operating members of the imaging device may differ for each user. For example, in general, each user often assigns frequently used functions to spots allowing easy operation. Therefore, for example, in a case where one imaging device is used by a plurality of people, a function of the operating member may be changed every time the user who uses the device is changed.

A technical idea according to the present disclosure has been conceived in view of the points described above, and makes it possible to cause execution of a function that is related to an imaging device and corresponds to an imaging status including whether an operation device is fixed to the imaging device or separated from the imaging device when an operation is performed on the operation device that is removable, and to cause the imaging device to function in a way desired by a user.

### <2. Embodiment>

### <<2.1. Outline of system 1>>

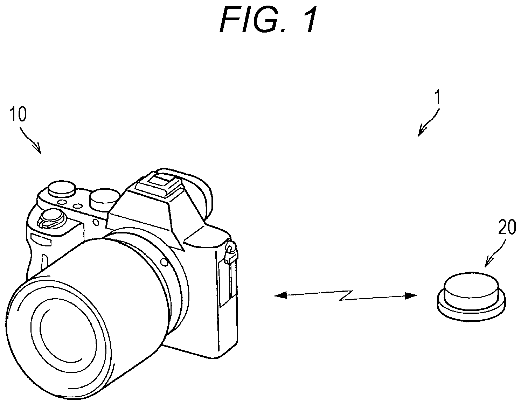

First, an outline of a system 1 according to an embodiment of the present disclosure will be described with reference to Figs. 1 to 3. Figs. 1 to 3 are views for explaining an outline of the system 1 according to an embodiment of the present disclosure.

The system 1 according to the embodiment of the present disclosure includes an imaging device 10 and an operation device 20. The imaging device 10 has an imaging function and a communication function. The imaging device 10 communicates with at least one operation device 20 through the communication function. The operation device 20 is a device for operation of the imaging device 10 and has a communication function. Between the imaging device 10 and the operation device 20, information related to execution of a function is transmitted and received.

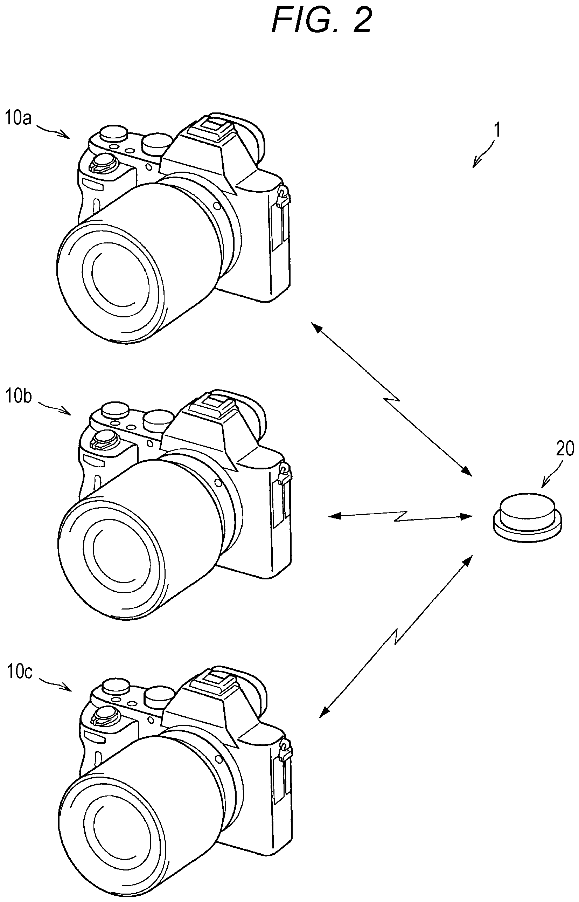

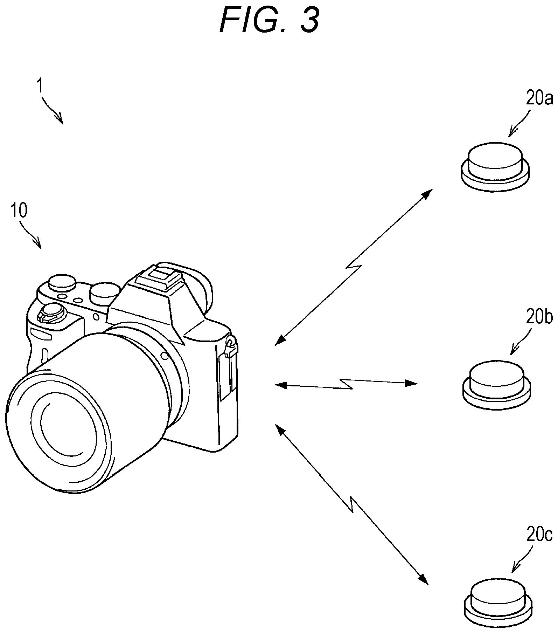

As shown in Fig. 1, the system 1 may have one imaging device 10 and one operation device 20. Furthermore, as shown in Fig. 2, the system 1 may have a plurality of imaging devices 10 and one operation device 20. Here, the operation device 20 transmits and receives information related to execution of a function of the imaging device 10, between with the plurality of imaging devices 10. Furthermore, as shown in Fig. 3, the system 1 may have one imaging device 10 and a plurality of operation devices 20, and the imaging device 10 transmits and receives information related to execution of a function of the imaging device 10, between with each of the plurality of operation devices 20. Note that, although not shown, the system 1 may include an information processing server as an example of an information processing apparatus. By the information processing server executing a process related to execution of a function of the imaging device 10, a processing load of the imaging device 10 and the operation device 20 can be reduced.

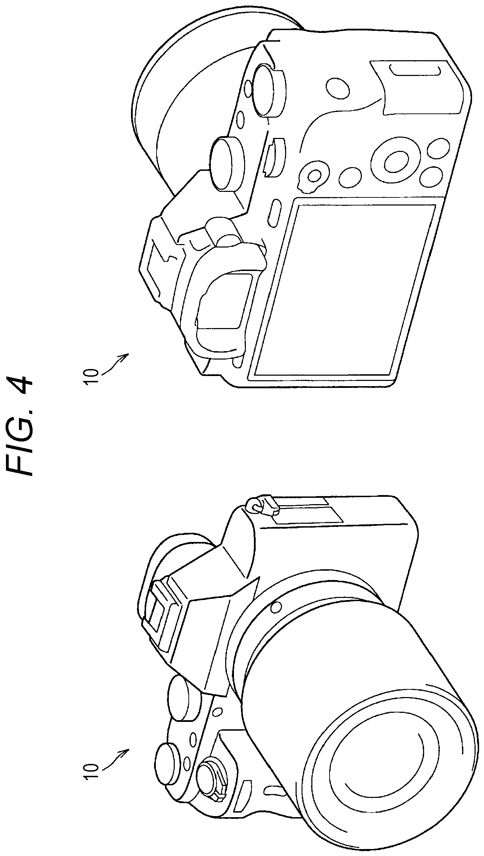

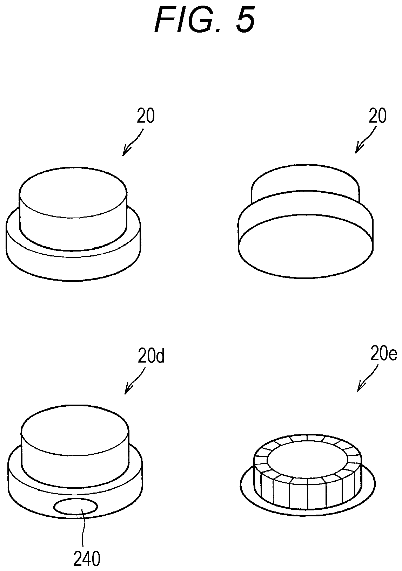

Fig. 4 is a view showing an appearance example of the imaging device 10 according to the present embodiment. The imaging device 10 is an example of an information processing apparatus capable of generating a desired captured image, and the like. Furthermore, the imaging device 10 can perform control such as adding information to a captured image and detecting a state of a device. Fig. 5 is a view showing an appearance example of the operation device 20 according to the present embodiment. The operation device 20 is an example of an information processing apparatus configured to cause the imaging device 10 to execute a predetermined function. The operation device 20 as shown in the upper left and the upper right of Fig. 5 may be a device including a button that enables an input operation. Note that the operation device 20 may be provided with a mechanism for fixing to the imaging device 10, on a back surface. Examples of a fixing method include adhesion and structural engagement. Furthermore, as shown in the lower left of Fig. 5, the operation device 20d may include an output unit 240. The output unit 240 may be configured by, for example, a liquid crystal panel, a light emitting diode (LED), or the like. Furthermore, as shown in the lower right of Fig. 5, the operation device 20 may include a wheel dial as an input unit. Note that, although not shown, the operation device 20 may include a touch panel, a direction lever, or the like as an input unit.

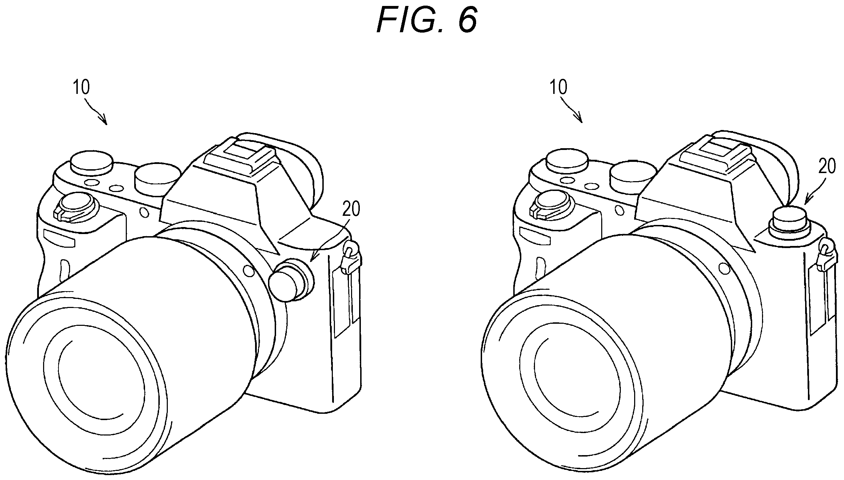

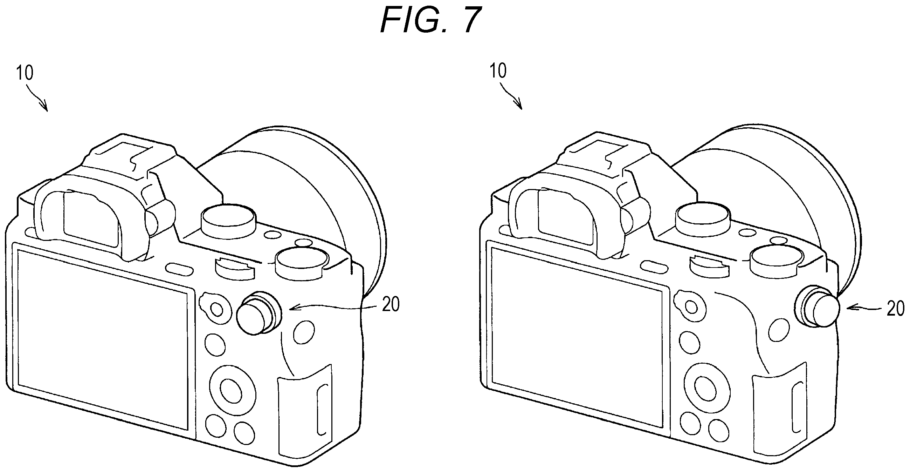

The operation device 20 can be in a state of being fixed to the imaging device 10 as described above. Figs. 6 and 7 are views for explaining a state in which the operation device 20 is fixed to the imaging device 10, according to the present embodiment. As shown in Fig. 6, the operation device 20 may be fixed to a front surface or an upper surface of the imaging device 10. Furthermore, as shown in Fig. 7, the operation device 20 may be fixed to a back surface or a side surface of the imaging device 10. A fixed spot on the imaging device 10 may be any spot on the imaging device 10, or may be a predetermined spot on the imaging device 10 such as a receiving part that can engage with the operation device 20 as described above.

### <<2.2. Functional configuration example>>

### [2.2.1. Functional configuration example of imaging device 10]

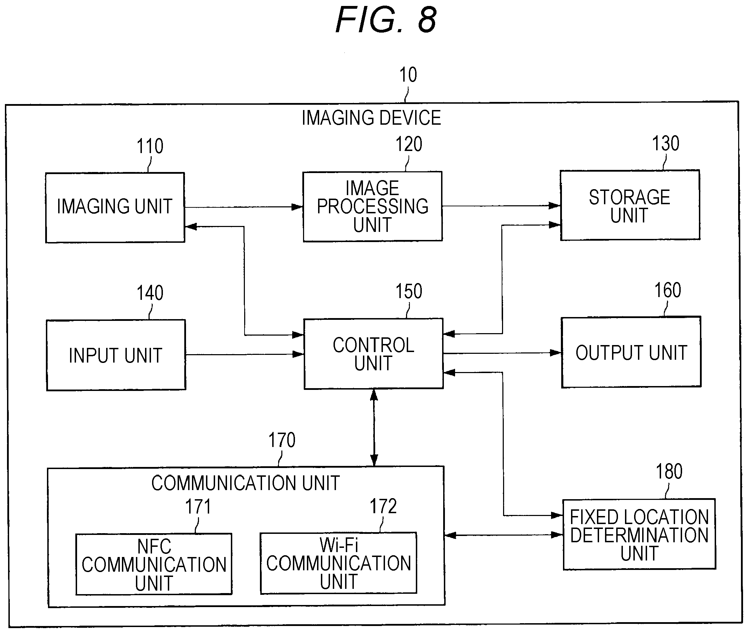

Next, an example of a functional configuration of the imaging device 10 according to the present embodiment will be described with reference to Fig. 8. Fig. 8 is a diagram for explaining an example of a functional configuration of the imaging device 10 according to the present embodiment. The imaging device 10 is an example of an information processing apparatus including an imaging unit 110, an image processing unit 120, a storage unit 130, an input unit 140, a control unit 150, an output unit 160, a communication unit 170, and a fixed location determination unit 180.

### (Imaging unit 110)

The imaging unit 110 captures an image under control of the control unit 150, which will be described later. Furthermore, the imaging unit 110 provides image data obtained by image capturing, to the image processing unit 120. Note that the imaging unit 110 may include an imaging optical system that condenses light, such as an imaging lens and a zoom lens, and a signal conversion element such as a charge coupled device (CCD) or a complementary metal oxide semiconductor (CMOS).

### (Image processing unit 120)

The image processing unit 120 executes various processes on image data provided by the imaging unit 110. For example, the image processing unit 120 appropriately executes noise removal, color tone correction, edge detection, and the like.

### (Storage unit 130)

The storage unit 130 stores image data provided by the image processing unit 120 and various types of information related to the imaging device 10 and the operation device 20.

### (Input unit 140)

The input unit 140 receives an operation input by a user. For example, a function related to the imaging device 10 can be executed on the basis of the operation input received by the input unit 140. Furthermore, the input unit 140 includes various sensors for detection of a state of the imaging device 10. Examples of the sensor include sensors that detect a current location, a position, and an orientation of the imaging device 10, a temperature, a humidity, and the like. For example, examples of the sensor that detects a current location of the imaging device 10 include, for example, a global positioning system (GPS) positioning sensor. Furthermore, examples of the sensor that detects a position of the imaging device 10 include a gyro sensor, an acceleration sensor, and the like. Furthermore, examples of the sensor that detects an orientation of the imaging device 10 include a geomagnetic sensor and the like.

### (Control unit 150)

The control unit 150 controls each function of the imaging device 10. Specifically, when the operation device 20 is operated, the control unit 150 causes the imaging unit 110 and the output unit 160 to execute a function that is related to the imaging device 10 and associated in advance, on the basis of imaging status information including fixation and separation information. Here, the fixation and separation information is information indicating whether the operation device 20 is in a fixed state of being fixed to the imaging device 10 or a separated state of being separated from the imaging device 10. Furthermore, the imaging status information refers to information indicating a status and a surrounding condition of the imaging device 10 when the imaging device 10 executes image capturing, a status of a user who uses the imaging device 10, and the like. Furthermore, the function related to the imaging device 10 is, for example, a shutter function, a start and stop function for moving image capturing, a white balance setting function, and the like. The control unit 150 may cause the imaging unit 110 and the output unit 160 to execute a function associated with each state depending on, for example, whether the operation device 20 is in the fixed state or the separated state.

Furthermore, in a case where the fixation and separation information indicates that the operation device 20 is in the fixed state, the control unit 150 may cause the imaging unit 110 and the output unit 160 to execute a function that is related to the imaging device 10 and associated in advance, further on the basis of a fixed location of the operation device 20 on the imaging device 10. The fixed location here may be, for example, a predetermined spot on the imaging device 10. Furthermore, the fixed location may be a relative location with respect to the imaging device 10, such as, for example, an upper side, a lower side, and a left side surface of the imaging device 10. Note that the relative location with respect to the imaging device 10 may be determined by the fixed location determination unit 180 described later, for example, on the basis of communication with the operation device 20 by the communication unit 170 described later.

Furthermore, in addition to the fixation and separation information, the control unit 150 may cause the imaging unit 110 and the output unit 160 to execute a function that is related to the imaging device 10 and associated in advance, further on the basis of information included in imaging status information and indicating a state of the imaging device 10. Here, the state of the imaging device 10 includes, for example, a position and a positioning location of the imaging device 10, and may also include current time and a current time zone, and a surrounding situation of the imaging device 10 such as a surrounding temperature, humidity, atmospheric pressure, and brightness. Note that the position of the imaging device 10 is, for example, a position in which a front surface of the imaging device 10 is facing downward, a position in which a right surface is facing downward, and the like. The control unit 150 may cause the imaging unit 110 and the output unit 160 to execute a function that is related to the imaging device 10 and associated in advance, on the basis of a plurality of pieces of information shown as a state of the imaging device 10 described above.

Furthermore, the control unit 150 may cause the imaging unit 110 and the output unit 160 to execute the function related to the imaging device 10 and associated in advance, further on the basis of biometric information of the user. Here, the biometric information of the user is, for example, fingerprint information of the user. The fingerprint information of the user may be detected by the operation device 20 described later. As a result, even in a case where the same operation device 20 is operated, it is possible to execute different functions for each user who uses the imaging device 10 and the operation device 20, and to operate the imaging device 10 in accordance with preferred assignment of each user without work for changing the function assignment. Furthermore, the control unit 150 may cause the imaging unit 110 and the output unit 160 to execute a function that is related to the imaging device 10 and associated in advance, on the basis of information indicating which finger of the user has a fingerprint indicated by the fingerprint information, even for the same user. As a result, for example, it is possible to change a function to be executed in a case where a way of gripping the imaging device 10 is changed, which enables assignment of a function according to a more detailed situation.

Furthermore, in a case where there is a plurality of operation devices 20 registered in the imaging device 10, the control unit 150 may cause the imaging unit 110 and the output unit 160 to execute a function that is related to the imaging device 10 and associated in advance, further on the basis of which operation devices 20 it is, among the plurality of operation devices 20. Here, as a method of identifying the plurality of operation devices 20, for example, there is identification information indicating each operation device 20. By executing different functions for each of the operation devices 20, the operation of the imaging device 10 can be performed more flexibly.

Meanwhile, functions suitable for execution may differ depending on a type of the operation device 20. Here, the type of the operation device 20 refers to a button, a wheel dial, a touch panel, a direction lever, or the like. For example, it is considered that the button is suitable for the shutter function and the wheel dial is suitable for adjusting a set value such as white balance. Therefore, the control unit 150 may cause the imaging unit 110 and the output unit 160 to execute a function that is related to the imaging device 10 and associated in advance, on the basis of the type of the operation device 20. As a result, the function to be executed can be made different only by changing the type of the operation device 20 to be used, and the convenience can be further improved.

Note that a control unit 220 of the operation device 20 described later may similarly execute execution control of a function related to the imaging device 10 by the control unit 150 described above. Furthermore, in such a case, the control unit 150 need not to specify and perform execution control of the function related to the imaging device 10 based on the above-described imaging status information, and issues a function execution instruction on the basis of control from the operation device 20.

### (Output unit 160)

The output unit 160 outputs various types of information related to the imaging device 10. For example, the output unit 160 displays visual information for receiving an operation from the user.

### (Communication unit 170)

The communication unit 170 executes wireless communication with the operation device 20. The communication unit 170 includes a near field communication (NFC) communication unit 171 configured to execute communication with other devices by an NFC system, and a Wi-Fi (registered trademark) communication unit 172 configured to execute communication with other devices by a Wi-Fi system. For example, in a case where the NFC communication unit 171 succeeds in establishing communication with the operation device 20 by the NFC system, the NFC communication unit 171 may continue the communication with the operation device 20. Whereas, in a case where the NFC communication unit 171 fails to establish communication with the operation device 20, the Wi-Fi communication unit 172 may establish communication with the operation device 20 by the Wi-Fi system.

### (Fixed location determination unit 180)

The fixed location determination unit 180 is an example of a fixation and separation determination unit configured to determine whether the operation device 20 is in a state of the fixed state or the separated state. Whether the operation device 20 is in a state of the fixed state or the separated state is indicated as, for example, fixation and separation information. For example, the fixed location determination unit 180 may determine the state by the input unit 140. Furthermore, the fixed location determination unit 180 may determine the fixation and separation state on the basis of a communication system in which the communication unit 170 establishes communication with the operation device 20. For example, the fixed location determination unit 180 may determine that the operation device 20 is in the fixed state in a case where the NFC communication unit 171 of the communication unit 170 establishes communication with the operation device 20 by the NFC system. Whereas, the fixed location determination unit 180 may determine that the operation device 20 is in the separated state in a case where the Wi-Fi communication unit 172 of the communication unit 170 establishes communication with the operation device 20 by the Wi-Fi system. In this way, by determining the fixation and separation state by communication systems with different effective communication distances, the operation device 20 need not to be provided with a mechanism for sensing the fixed state, and can be fixed to the imaging device 10 in a more flexible manner.

In a case where the operation device 20 is in the fixed state, the fixed location determination unit 180 may further determine a fixed location on the imaging device 10. As described above, the fixed location determined by the fixed location determination unit 180 can be used for execution control of the function that is related to the imaging device 10 and associated in advance by the control unit 150. In a case where the NFC communication unit 171 establishes communication with the operation device 20 by the NFC system, the fixed location determination unit 180 may determine the fixed location of the operation device 20 on the basis of directivity information of the communication by the NFC system. For example, the fixed location determination unit 180 may determine which side surface of the imaging device 10, for example, an upper surface of the imaging device 10, is fixed with the operation device 20 on the basis of the directivity information. Furthermore, the fixed location determination unit 180 may determine the fixed location on the imaging device 10 in more detail, such as in the upper left of a back surface of the imaging device 10.

### [2.2.2. Functional configuration example of operation device 20]

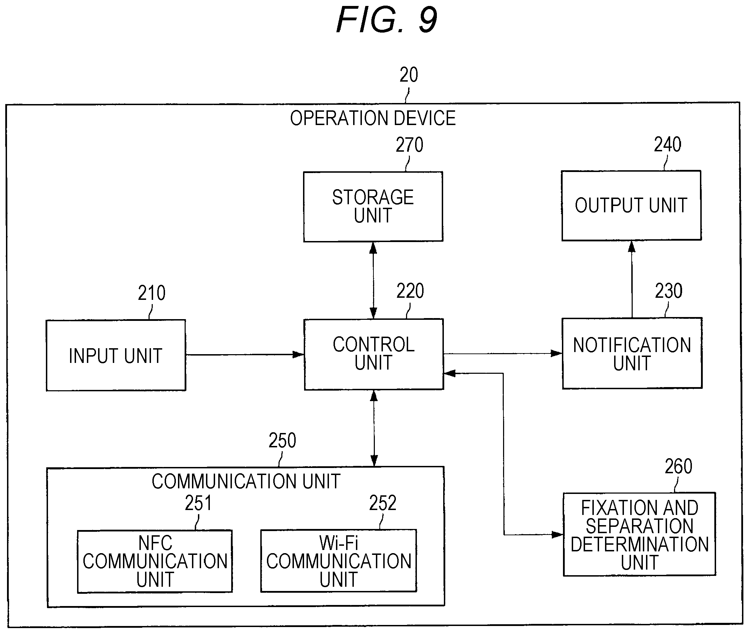

Next, an example of a functional configuration of the operation device 20 according to the present embodiment will be described with reference to Fig. 9. Fig. 9 is a diagram for explaining an example of a functional configuration of the operation device 20 according to the present embodiment. The operation device 20 is an example of an information processing apparatus including an input unit 210, the control unit 220, a notification unit 230, an output unit 240, a communication unit 250, a fixation and separation determination unit 260, and a storage unit 270.

### (Input unit 210)

The input unit 210 receives an operation input by the user. For example, according to information indicating that the input unit 210 has received the operation input, a function that is related to the imaging device 10 and corresponds to an imaging status at that time is executed. Note that, in a case where there is a plurality of types of the operation device 20, the input unit 210 receives an input value corresponding to the type. Furthermore, the input unit 210 includes various sensors configured to determine whether or not being fixed to the imaging device 10. Examples of the sensor include, for example, a physical switch that detects pressing and releasing, a switch that electrically detects contact, and the like.

### (Control unit 220)

The control unit 220 controls each function of the operation device 20. Furthermore, the control unit 220 may have a function similar to that of the control unit 150 of the imaging device 10 described above, that is, an execution control function of a function related to the imaging device 10 when the operation device 20 is operated. That is, the control unit 220 may cause the imaging device 10 to perform various functions on the basis of imaging status information including fixation and separation information and on the basis of an operation on the operation device 20. Even in a case where the control unit 150 of the imaging device 10 has the execution control function, the control unit 220 may have a similar function. Whereas, in a case where the control unit 150 of the imaging device 10 does not have the execution control function, the control unit 220 may have a similar function instead.

### (Notification unit 230)

The notification unit 230 causes the output unit 240, which will be described later, to notify the user of execution of a function related to the imaging device 10. For example, in the notification unit 230, in a case where a function is executed by the imaging device 10 in response to an operation on the operation device 20, the notification unit 230 may control the output unit 240 to notify that the function has been executed.

### (Output unit 240)

The output unit 240 executes various output processes in order to notify the user of execution of a function related to the imaging device 10, on the basis of a request from the notification unit 230. The output unit 240 may notify execution of the function by, for example, outputting visual information through a liquid crystal panel, LED, or the like, or outputting auditory information through a speaker or the like. Furthermore, the output unit 240 may notify execution of the function by vibration generated by a motor, a vibration panel, or the like. The output unit 240 may output information by any of the output means described above, or may output information by a plurality of output means.

### (Communication unit 250)

The communication unit 250 executes wireless communication with the imaging device 10. The communication unit 250 includes an NFC communication unit 251 configured to execute communication with other devices by the NFC system and a Wi-Fi communication unit 252 configured to execute communication with other devices by the Wi-Fi system. In a case where the NFC communication unit 251 first tries to establish communication by the NFC system when starting communication with the imaging device 10, and the establishment fails, the Wi-Fi communication unit 252 may try to establish communication by the Wi-Fi system.

### (Fixation and separation determination unit 260)

The fixation and separation determination unit 260 is an example of a fixation and separation determination unit configured to determine whether the operation device 20 is in the fixed state or the separated state. The fixation and separation determination unit 260 may make a determination on the basis of, for example, which communication system is used by the communication unit 250 to establish communication with the imaging device 10. A result of the determination process by the fixation and separation determination unit 260 can be used for execution control of a function related to the imaging device 10 caused by an operation on the operation device 20. Furthermore, the fixation and separation determination unit 260 may perform the determination described above on the basis of detection results of various sensors provided in the input unit 210 and configured to determine whether or not being fixed to the imaging device 10. Note that the determination process by the fixation and separation determination unit 260 as to whether the operation device 20 is in the fixed state or the separated state may be executed by the fixed location determination unit 180 of the imaging device 10.

### (Storage unit 270)

The storage unit 270 stores various types of information related to the imaging device 10 and the operation device 20. For example, the storage unit 270 may store a combination of information related to a function execution condition of the imaging device 10 and a corresponding function.

### <<2.3. Setting example>>

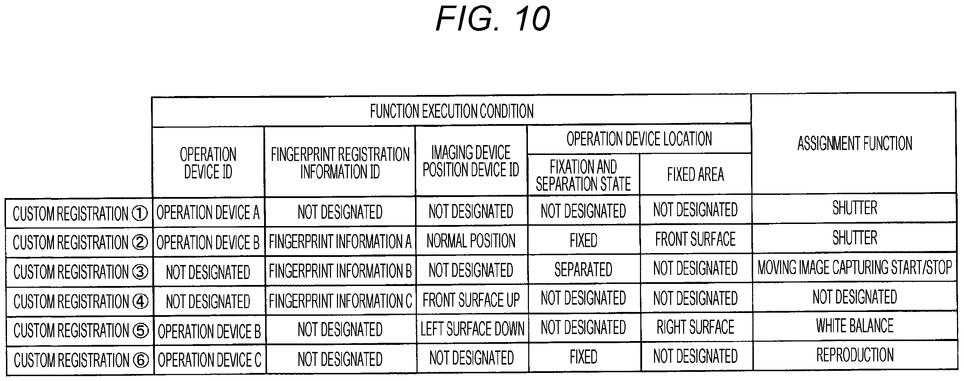

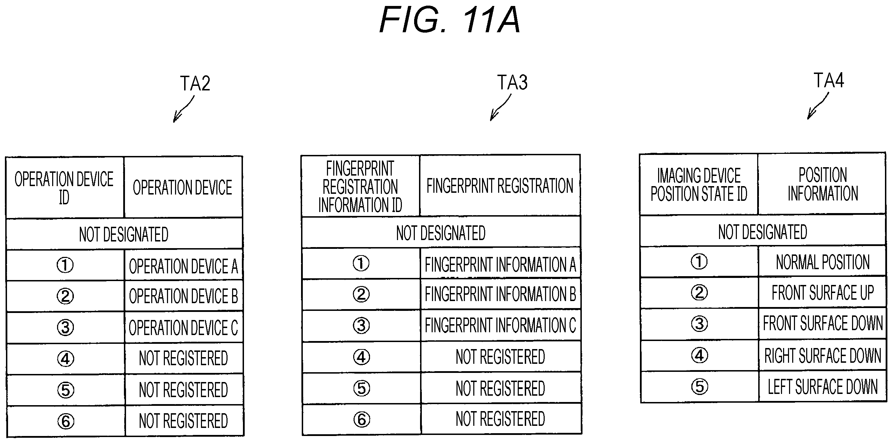

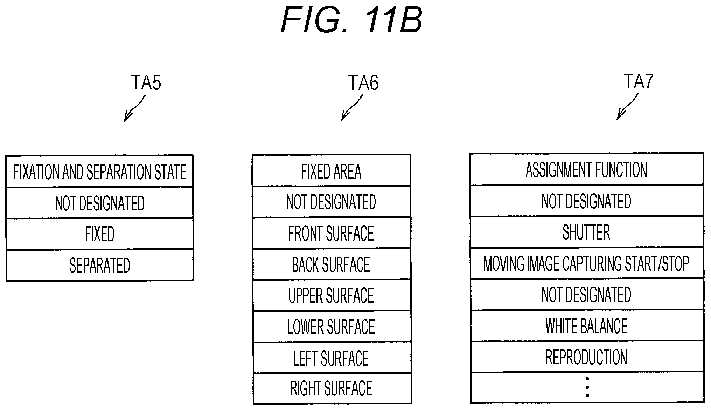

Next, an example of setting a function execution condition according to the present embodiment will be described with reference to Figs. 10 and 11. Note that, in the following specification, an example is described in which the control unit 150 of the imaging device 10 performs function execution control according to an operation on the operation device 20 unless otherwise specified, but the control unit 220 of the operation device 20 can also perform similar control.

The storage unit 130 may store a combination of a function execution condition and a function. Here, the function execution condition refers to a condition related to at least one imaging device 10 in which the associated function is executed, and the operation device 20. In a case where the communication unit 250 receives information indicating an operation on the operation device 20 from the operation device 20, which function can be executed is shown. In a case where a condition designated as the function execution condition is satisfied, the control unit 150 controls to execute a function that is related to the imaging device 10 and associated in advance.

The condition designated as the function execution condition is, for example, which operation device 20 it is, which fingerprint information (or corresponding user identification information) it is, what kind of a position the imaging device 10 is in, whether the operation device 20 is in the fixed state or the separated state, and the like. Note that, there may be a plurality of conditions designated as the function execution condition. In a case where a plurality of conditions is designated, the control unit 150 may execute a corresponding function, for example, only in a case where all the conditions are satisfied. Furthermore, in a case where a plurality of conditions is designated, the control unit 150 may execute the corresponding function in a case where any of the conditions is satisfied.

An example of Fig. 10 will be described below. Fig. 10 is a view for explaining an example of setting a combination of a function execution condition and a corresponding function related to the imaging device 10, according to the present embodiment. Fig. 10 shows Table TA1 having a combination of a function execution condition and a function.

Table TA1 has a plurality of combinations of function execution conditions and functions as "custom registrations". In each combination, each condition is designated as the function execution condition. Note that the control unit 150 need not to consider a condition represented as "not designated" as the function execution condition.

In Table TA1, for example, in "custom registration 1", "operation device A" is designated as "operation device ID" and "shutter" is designated as "assignment function". That is, in a case where the operated operation device 20 is the "operation device A", the shutter function is executed. Furthermore, in "custom registration 2", "operation device B" is designated as "operation device ID", "fingerprint information A" is designated as "fingerprint registration information ID", "normal position (position in which a lower surface of the imaging device 10 is facing downward)" is designated as "imaging device position state ID", "fixed" is designated as "fixation and separation state", "front surface" is designated as "fixed area", and "shutter" is designated as "assignment function". That is, in a case where the operated operation device 20 is "operation device B", a fingerprint of a finger that has operated the operation device 20 is a fingerprint registered as "fingerprint information A", the lower surface of the imaging device 10 is facing downward, the operation device 20 is in the fixed state, and the fixed spot is a front surface of the imaging device 10, the shutter function is executed.

Furthermore, in a case where "operation device ID" is "not designated" as in "custom registration 3", regardless of which operation device 20, "moving image capturing START/STOP", which is "assignment function", is executed in a case where other conditions are satisfied. Furthermore, for example, in a case where "assignment function" is "not designated" as in "custom registration 4", a function related to the imaging device 10 is not executed even in a case where a condition designated as the function execution condition is satisfied. Furthermore, "white balance" designated as "assignment function" as in "custom registration 5" is a function for adjusting white balance in image capturing of the imaging device 10. Furthermore, "reproduction" designated as "assignment function" as in "custom registration 6" is a function for reproducing a moving image by the imaging device 10.

Note that, in a case where the predetermined operation device 20 is registered in the plurality of imaging devices 10, individual imaging devices 10 may have different functions to be executed in a case where corresponding other conditions and function execution conditions are satisfied, when the operation device 20 is operated. That is, by the operation device 20 operating, the plurality of imaging devices 10 can be made to simultaneously execute different functions.

Figs. 11A and 11B are views for explaining an example of a condition designated as a function execution condition according to the present embodiment. Figs. 11A and 11B show items that can be designated in each of conditions designated as the function execution condition. The user designates a condition as the function execution condition by selecting an item that can be designated in each condition. Note that, in a case of designating which operation device 20 is to be the operation device 20 as the condition, the operation device 20 to be designated may be the operation device 20 registered in advance in the imaging device 10. Similarly, in a case of designating which fingerprint information is the detected fingerprint information as the condition, the fingerprint information to be designated may be fingerprint information registered in advance in the imaging device 10.

Hereinafter, an example of Fig. 11A and Fig. 11B will be described. Tables TA2 to TA4 in Fig. 11A each show items that can be selected in designating which operation device 20 it is, which fingerprint information it is, and what is a state of a position the imaging device 10 is in. Furthermore, Tables TA5 to TA7 in Fig. 11B each show items that can be selected in designating whether the operation device 20 is in the fixed state or the separated state, which spot the operation device 20 is fixed to, and which function is to be assigned. Note that, in Tables TA2 and TA3, up to six operation devices 20 and six pieces of fingerprint information can be individually registered, and up to three of them have been registered. However, needless to say that the number of pieces of registered information is not limited, and the registered information can be changed flexibly.

In this way, by associating the conditions related to the imaging device 10 and the operation device 20 in advance as the function execution conditions, it is possible to execute a function desired by the user in each situation.

### <<2.4. Display screen example>>

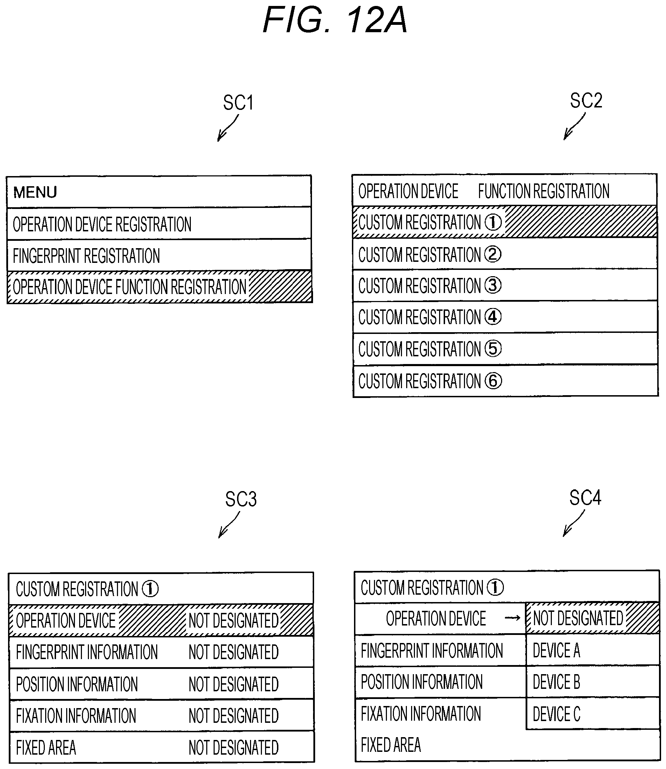

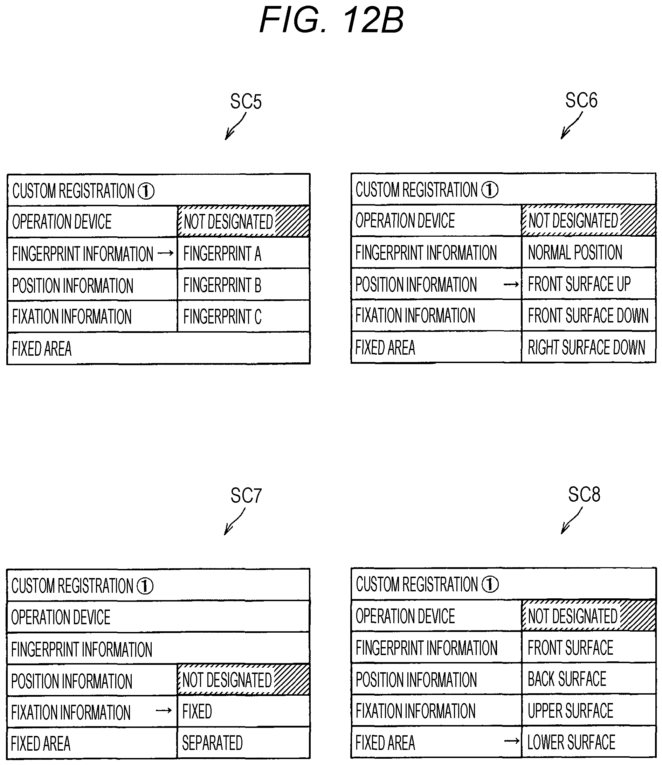

Next, with reference to Figs. 12 to 15, a description is given to an example of a display screen related to a setting of a function execution condition by the output unit 160 of the imaging device 10 according to the present embodiment. Figs. 12 to 15 are views for explaining an example of a display screen related to a setting of a function execution condition by the output unit 160 of the imaging device 10 according to the present embodiment.

Figs. 12A and 12B show Display screens SC1 to SC8 for designating conditions as the function execution condition. The output unit 160 displays Display screen SC2 when operation device function registration is selected on the displayed Display screen SC1. The output unit 160 displays Display screen SC3 when the user selects which a recognition number is to be used to register a combination on Display screen SC2. The user designates a condition from each item displayed on Display screen SC3. Display examples for each item are shown on Display screens SC4 to SC8. On Display screens SC4 to SC8, the user individually designates the operated operation device 20, fingerprint information, a position of the imaging device 10, a fixation and separation state, and a fixed location.

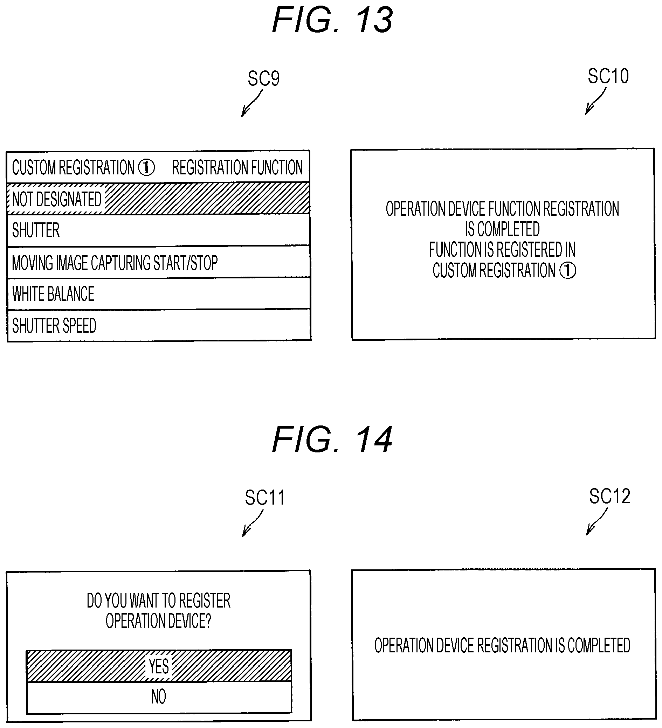

Fig. 13 shows Display screen SC9 for setting a function related to the imaging device 10 and executed in a case where the function execution condition is satisfied, and Display screen SC10 for notifying of completion of registration. After designating the function execution condition, when the user designates a function to be executed on Display screen SC9, the output unit 160 displays Display screen SC10 notifying completion of registration.

Furthermore, Fig. 14 shows display screens SC11 and SC12 for registering the operation device 20 in the imaging device 10. In a case where the user selects "Yes" on Display screen SC11 asking whether or not to register the operation device 20, the control unit 150 starts a registration process of the operation device 20. When the registration process of the operation device 20 by the control unit 150 is completed, the output unit 160 displays Display screen SC12 notifying the completion of the registration of the operation device 20. The registration process of the operation device 20 by the control unit 150 will be described later.

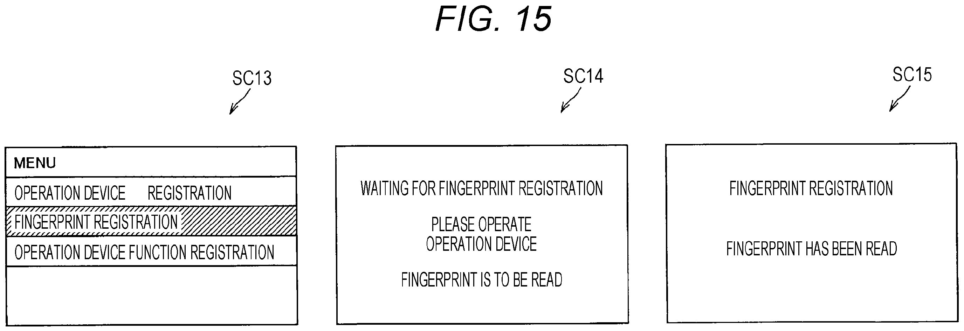

Furthermore, Fig. 15 shows display screens SC13 to SC15 for registering fingerprint information in the imaging device 10. When "fingerprint registration" is selected on Display screen SC13, the output unit 160 displays Display screen SC14 requesting an operation on the operation device 20 in order to detect a fingerprint. When the fingerprint of the user is detected and the fingerprint information registration process by the control unit 150 is completed, the output unit 160 outputs Display screen SC15 notifying the completion of the fingerprint information registration. The registration process of the operation device 20 by the control unit 150 will be described later.

In this way, the user can freely select the function execution condition and the function to be executed, and register the operation device 20 and the fingerprint information to be used as the function execution condition.

### <<2.5. Specific example>>

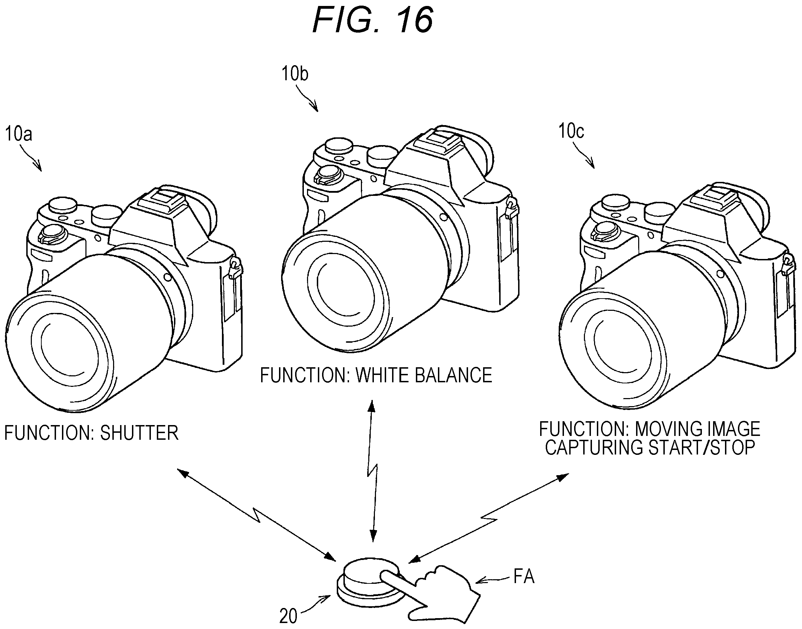

Next, with reference to Figs. 16 to 18, a description is given to a specific example of execution control, by the control unit 150, of a function related to the imaging device 10 and according to an operation on the operation device 20, according to the present embodiment. Figs. 16 to 18 are views for explaining a specific example of execution control, by the control unit 150, of a function related to the imaging device 10 and according to an operation on the operation device 20, according to the present embodiment.

Fig. 16 shows imaging devices 10a to 10c and the operation device 20. Here, it is assumed that the operation device 20 is registered in advance in the imaging devices 10a to 10c. As described above, in a case where one operation device 20 is operated, the plurality of imaging devices 10 each can be made to perform different functions.

An example of Fig. 16 will be described. The operation device 20 is in a state of being separated from the imaging devices 10a to 10c. Here, when the operation device 20 is operated by a hand FA of the user, each of the imaging devices 10a to 10c executes a function associated in advance, on the basis of fixation and separation information. In the example of Fig. 16, in accordance with the operation on the operation device 20, the imaging device 10a executes the shutter function, the imaging device 10b executes the white balance setting function, and the imaging device 10c executes the moving image capturing START/STOP function.

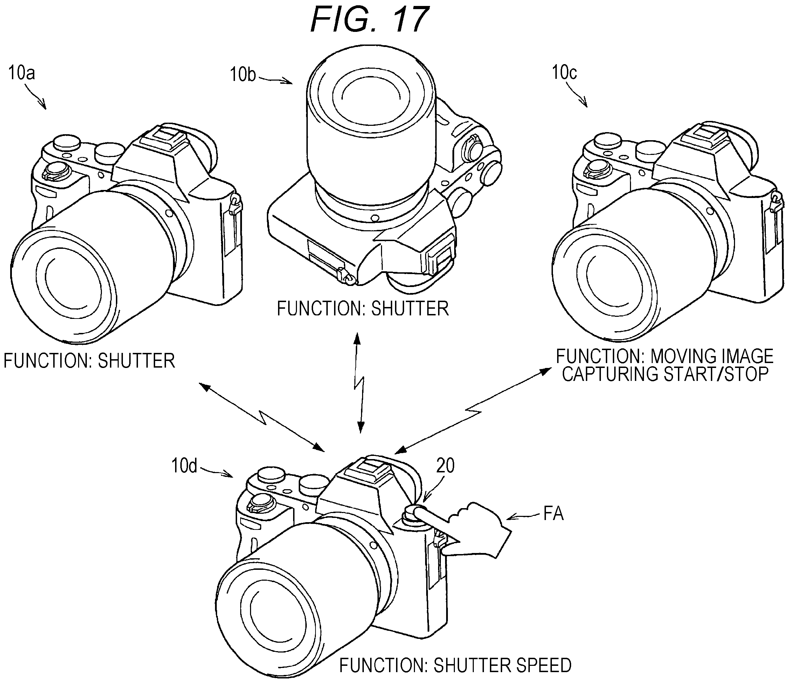

Fig. 17 shows the imaging devices 10a to 10c, the operation device 20, and an imaging device 10d. Here, the imaging device 10b is in a position in which a left surface is facing downward, and the operation device 20 is in a state of being fixed to the imaging device 10d. Even in a state where the operation device 20 is fixed to any imaging device 10 among the plurality of imaging devices 10 as shown in Fig. 17, the plurality of imaging devices 10 each can perform different functions in a case where the operation device 20 is operated.

An example of Fig. 17 will be described. The operation device 20 is in a state of being fixed to the imaging device 10d. Here, when the operation device 20 is operated by the hand FA of the user, each of the imaging devices 10a to 10d executes a function associated in advance, on the basis of imaging status information. In the example of Fig. 17, in accordance with the operation on the operation device 20, the imaging device 10a executes the shutter function, the imaging device 10b also executes the shutter function, the imaging device 10c executes the moving image capturing START/STOP function, and the imaging device 10d executes a shutter speed adjustment function. Here, since the imaging device 10b is in a different position as compared with Fig. 16, the function associated in advance is changed to the shutter function. Note that, here, it is determined that the operation device 20 is in the separated state for the imaging devices 10a to 10c and is in the fixed state for the imaging device 10d.

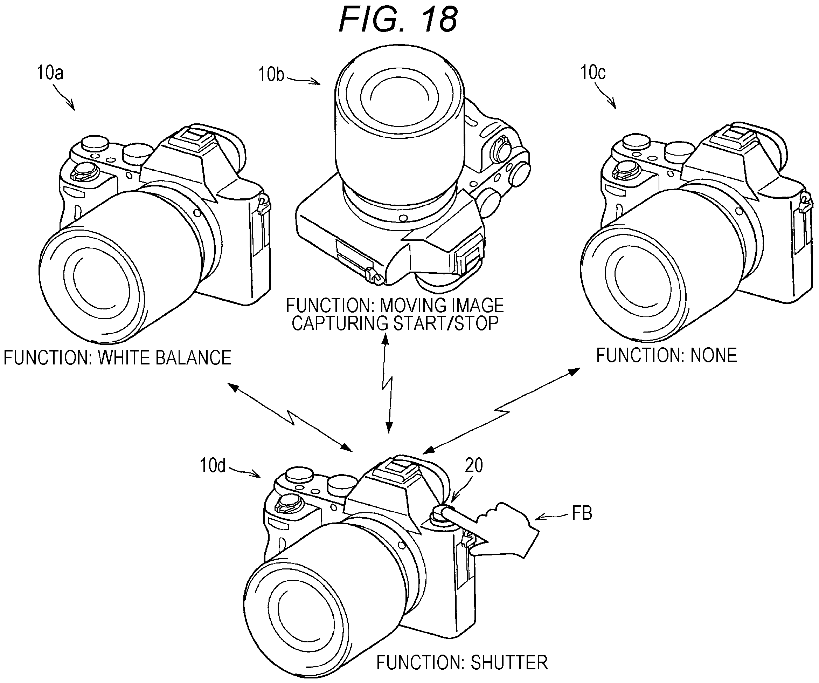

Fig. 18 shows the imaging devices 10a to 10d and the operation device 20. Here, as compared with Fig. 17, the operation device 20 is operated by a hand FB of the user, which is different from the hand FA of the user. Therefore, if the user's hand designated as the function execution condition is different, the function executed by the imaging device 10 can also be different.

An example of Fig. 18 will be described. When the operation device 20 is operated by the hand FA of the user, each of the imaging devices 10a to 10d executes a function associated in advance, on the basis of imaging status information. In the example of Fig. 18, in accordance with the operation on the operation device 20, the imaging device 10a executes the white balance setting function, the imaging device 10b executes the moving image capturing START/STOP function, the imaging device 10c does not execute any function, and the imaging device 10d executes the shutter function. As compared with Fig. 17, since the user's hand that operates the operation device 20 is different, the function executed by each imaging device 10 is also different. Note that the imaging device 10c does not execute a function related to the imaging device 10 in a case where the function execution condition registered in advance does not exist.

In this way, on the basis of the combination of the function execution condition and the function related to the imaging device 10, each imaging device 10 executes the function, which makes it possible to flexibly switch the function to be executed in accordance with the imaging status.

Note that, even in a case where there is a plurality of operation devices 20 in Figs. 16 to 18, the imaging device 10 may perform similar control related to function execution.

### <3. Action example>

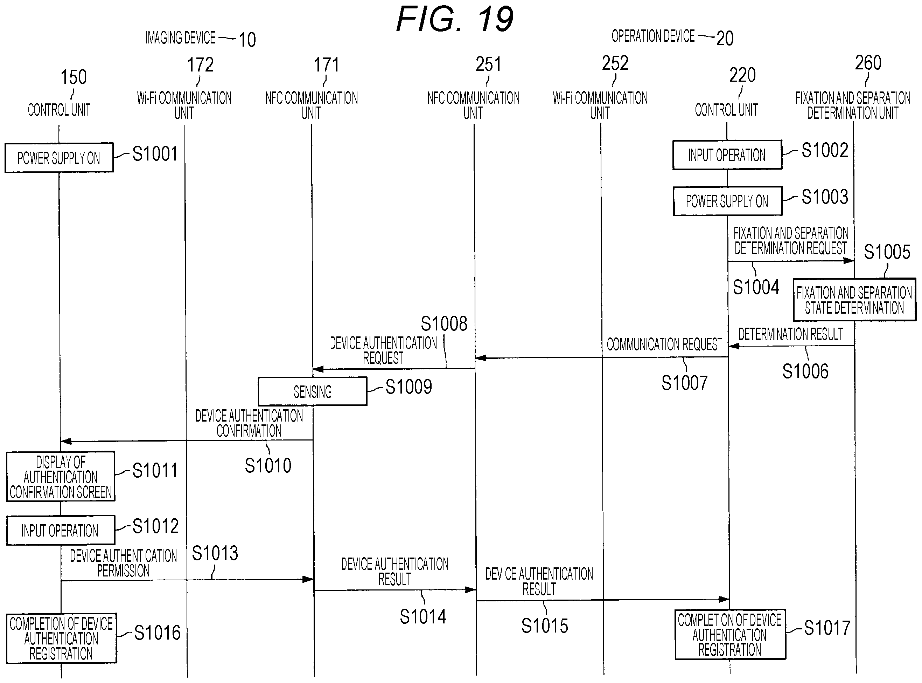

Next, with reference to Figs. 19 to 29, a description is given to an example of an action flow of execution control, by the control unit 150, of a function related to the imaging device 10 and according to an operation on the operation device 20, according to the present embodiment.

### <<3.1. Authentication action example>>

First, with reference to Fig. 19, a description is given to an example of an action flow when communication is first performed between the imaging device 10 and the operation device 20 according to the present embodiment. Fig. 19 is a view for explaining an example of an action flow when communication is first performed between the imaging device 10 and the operation device 20 according to the present embodiment. Fig. 19 is an example of a case where the operation device 20 is in the fixed state.

Referring to Fig. 19, first, the control unit 150 of the imaging device 10 turns ON power supply of the entire imaging device 10 (S1001). Next, the control unit 220 of the operation device 20 receives, from the input unit 210, information indicating that an operation from the user has been received (S1002). Next, the control unit 220 turns ON power supply of the entire operation device 20 in response to receiving the information (S1003).

Next, the control unit 220 requests the fixation and separation determination unit 260 to determine whether the operation device 20 is in the fixed state or the separated state (S1004). Next, the fixation and separation determination unit 260 determines whether the operation device 20 is in the fixed state or the separated state (S1005). Next, the fixation and separation determination unit 260 provides the control unit 220 with a determination result in step S1005 indicating that the operation device 20 is in the fixed state (S1006).

Next, the control unit 220 transmits a request for communication with the operation device 20 to the NFC communication unit 251 in accordance with the determination result provided in step S1006 (S1007). Next, the NFC communication unit 251 transmits an authentication request for its own device to the imaging device 10 by communication of the NFC system, on the basis of the request for communication received in step S1007 (S1008). Note that, in step S1008, the NFC communication unit 251 may transmit Wi-Fi communication authentication information in addition to the NFC communication authentication information.

Next, the NFC communication unit 171 of the imaging device 10 senses information related to the operation device 20 from the authentication request received in step S1008 (S1009). Next, the NFC communication unit 171 transmits a device authentication confirmation request on the basis of the information related to the operation device 20 and sensed in step S1009 (S1010). Next, the control unit 150 of the imaging device 10 causes the output unit 160 to output an authentication confirmation screen on the basis of the confirmation request transmitted in step S1010 (S1011). Note that the authentication confirmation screen outputted in step S1011 is, for example, Display screen SC11 shown in Fig. 14.

Next, the control unit 150 receives, from the input unit 140, information indicating that an operation for permitting authentication from the user has been received (S1012). Next, the control unit 150 transmits information indicating device authentication permission to the NFC communication unit 171 on the basis of the information received in step S1012 (S1013). Next, the NFC communication unit 171 transmits the authentication result to the operation device 20 by communication of the NFC system, on the basis of the information indicating the device authentication permission received in step S1007 (S1014). Note that the operation device 20 for which authentication is permitted and that is registered in step S1012 is added to a list of the operation devices 20 in Table TA2 shown in Fig. 11A.

Next, the NFC communication unit 251 of the operation device 20 transmits the authentication result transmitted in step S1014, to the control unit 220 (S1015). Next, the control unit 150 of the imaging device 10 and the control unit 220 of the operation device 20 complete the authentication registration of the operation device 20 (S1016, S1017), and the imaging device 10 and the operation device 20 end the actions.

In this way, by executing authentication between the imaging device 10 and the operation device 20 in advance, it is possible to automatically start communication between the two devices the next time both devices are used.

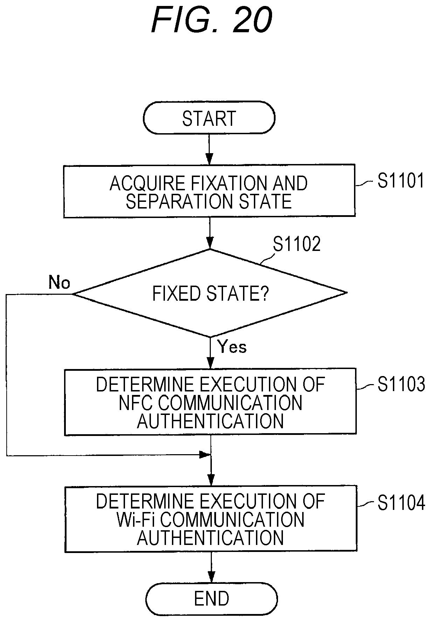

Next, with reference to Fig. 20, a description is given to an example of an action flow for determining a communication system based on determination by the fixation and separation determination unit 260 and based on a determination result by the communication unit 250 of the operation device 20 according to the present embodiment. Fig. 20 is a flowchart for explaining an example of an action flow by the fixation and separation determination unit 260 and the communication unit 250 of the operation device 20 according to the present embodiment.

Referring to Fig. 20, first, the fixation and separation determination unit 260 acquires information to be used for determination, from the input unit 210 (S1101). Next, in a case where the fixation and separation determination unit 260 determines as the fixed state (S1102: Yes), the communication unit 250 determines that NFC communication authentication is executed by the NFC communication unit 251 (S1103). Next, the communication unit 250 further determines that Wi-Fi communication authentication is executed by the Wi-Fi communication unit 252 (S1104), and the operation device 20 ends the actions.

Whereas, in a case where the fixation and separation determination unit 260 determines as the separated state (S1102: No), the communication unit 250 further determines that the Wi-Fi communication authentication is executed by the Wi-Fi communication unit 252 (S1104), and the operation device 20 ends the action. Note that, even in a case where the fixation and separation determination unit 260 determines in step S1102 as the separated state, the NFC communication authentication may be executed by the Wi-Fi communication unit 252 directly transmitting the NFC communication authentication information to the imaging device 10. Note that, in a case where the fixation and separation determination unit 260 determines whether the operation device 20 is in the fixed state or the separated state on the basis of the communication system of wireless communication between the imaging device 10 and the operation device 20, it is not necessary to execute an action of determining the communication system based on determination by the fixation and separation determination unit 260 and based on a determination result by the communication unit 250 of the operation device 20 shown in Fig. 20.

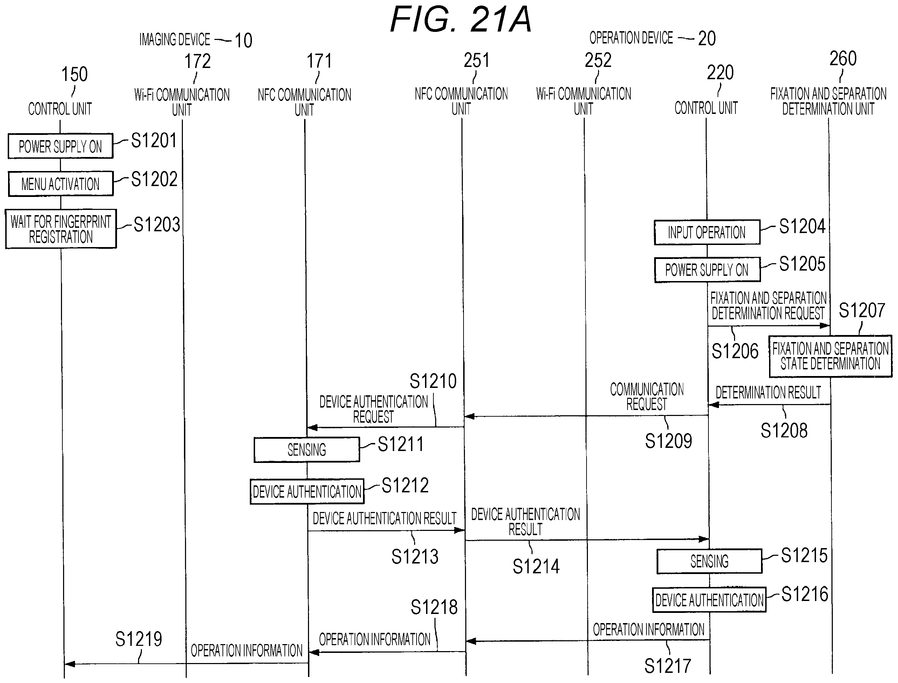

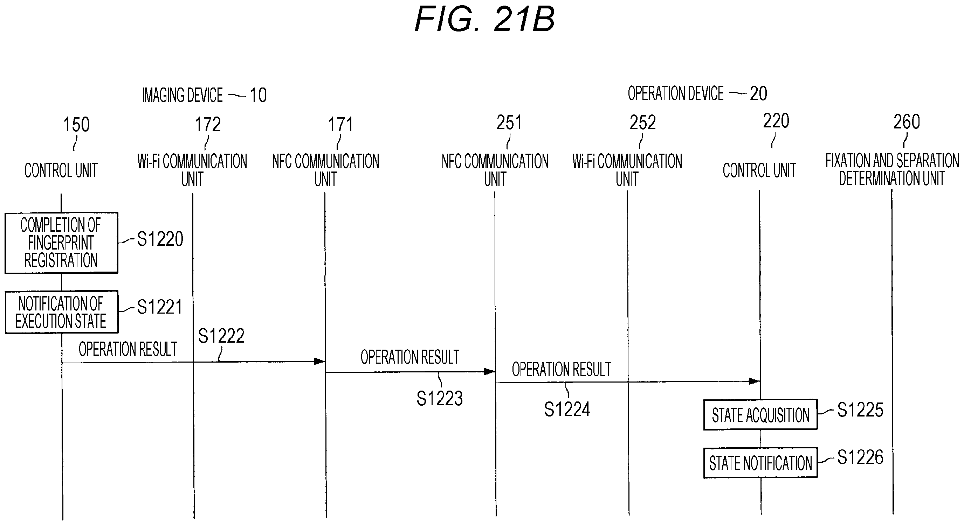

Next, with reference to Figs. 21A and 21B, a description is given to an example of an action flow of fingerprint information registration by the imaging device 10 and the operation device 20 according to the present embodiment. Figs. 21A and 21B are views for explaining an example of an action flow of the fingerprint information registration by the imaging device 10 and the operation device 20 according to the present embodiment.

Referring to Fig. 21A, first, the control unit 150 of the imaging device 10 turns ON power supply of the entire imaging device 10 (S1201). Next, the control unit 150 causes the output unit 160 to display a menu screen (S1202). Next, the control unit 150 waits for fingerprint registration, that is, waits for an operation on the operation device 20, on the basis of an operation from the user on the menu screen displayed in step S1202 (S1203). Note that the screen displayed on the output unit 160 in step S1202 is, for example, Display screen SC13 shown in Fig. 15. Furthermore, the screen displayed on the output unit 160 in step S1203 is, for example, Display screen SC14 shown in Fig. 15.

Next, steps S1204 to S1211 are similar to steps S1002 to S1009 shown in Fig. 19. Next, the NFC communication unit 171 authenticates the operation device 20 on the basis of the authentication request transmitted in step S1210 (S1212). Next, the NFC communication unit 171 transmits an authentication result to the operation device 20 by communication of the NFC system on the basis of information indicating permission in the device authentication executed in step S1212 (S1213). Next, the NFC communication unit 251 of the operation device 20 transmits the authentication result transmitted in step S1213, to the control unit 220 (S1214).

Next, the control unit 220 of the operation device 20 detects a fingerprint of the user, as fingerprint information, when the operation device 20 is operated by the input unit 210 in step S1204 (S1215). Next, the control unit 220 confirms input contents on the operation device 20 on the basis of step S1204 and step S1205 (S1216). Next, the control unit 220 transmits operation information including the fingerprint information, to the NFC communication unit 251 (S1217). Next, the NFC communication unit 251 transmits the operation information transmitted in step S1217, to the imaging device 10 (S1218).

Next, the NFC communication unit 171 of the imaging device 10 transmits the operation information transmitted in step S1218, to the control unit 150 (S1219). Next, referring to Fig. 21B, the control unit 150 completes the fingerprint information registration by receiving the operation information transmitted in step S1219 (S1220). Note that the screen displayed on the output unit 160 in step S1220 is, for example, Display screen SC15 shown in Fig. 15.

Next, the control unit 150 causes the output unit 160 and the operation device 20 to start notification of a registration completion state, on the basis of the completion of the fingerprint information registration in step S1220 (S1221). Next, the control unit 150 transmits information indicating an operation result in step S1204, that is, a result of the fingerprint information registration, to the NFC communication unit 171 on the basis of the start of the notification in step S1221 (S1222). Next, the NFC communication unit 171 transmits the information indicating the operation result transmitted in step S1222, to the operation device 20 (S1223) .

Next, the NFC communication unit 251 of the operation device 20 transmits the information indicating the operation result transmitted in step S1223, to the control unit 220 (S1224). Next, the control unit 220 acquires a state of the imaging device 10 on the basis of the information indicating the operation result transmitted in step S1224 (S1225). Next, the control unit 220 causes the notification unit 230 to notify of the state acquired in step S1225 (S1226), and the imaging device 10 and the operation device 20 end the actions. Note that the notification in step S1226 may be executed by any method such as visual information display, voice output, and vibration.

### <<3.2. Registration action example>>

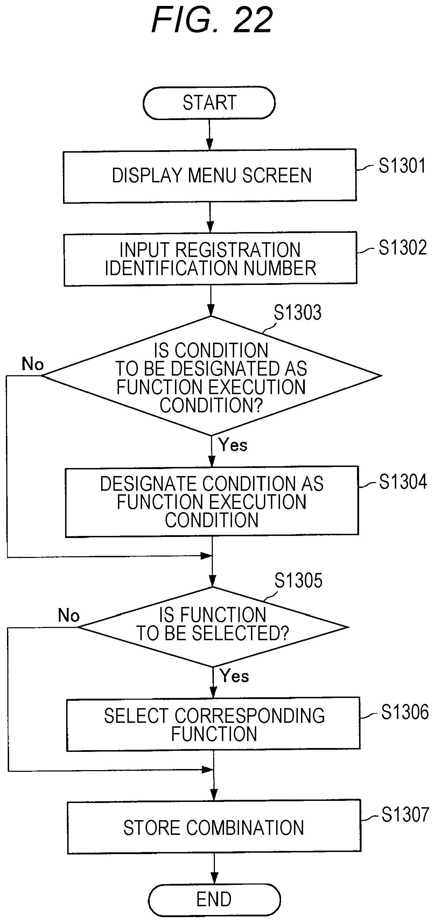

Next, with reference to Fig. 22, a description is given to an example of an action flow of registration, by the control unit 150, of a combination of a function execution condition and a corresponding function according to the present embodiment. Fig. 22 is a flowchart for explaining an example of an action flow of registration, by the control unit 150, of a combination of a function execution condition and a corresponding function according to the present embodiment.

Referring to Fig. 22, first, the output unit 160 displays a menu screen (S1301). Next, the input unit 140 receives, from the user, an input of an identification number for registering a combination (S1302). Next, in a case of designating a condition as the function execution condition in a combination corresponding to the identification number selected in step S1302 (S1303: Yes), the input unit 140 receives an input designating a condition, from the user (S1304). Whereas, in a case of not designating a condition as the function execution condition in a combination corresponding to the identification number selected in step S1302 (S1303: No), the process proceeds to step S1305.

Next, in a case of selecting a function corresponding to the function execution condition (S1305: Yes), the control unit 150 causes the user to select a function by displaying a function selection screen on the output unit 160 (S1306). Whereas, in a case of not selecting the function corresponding to the function execution condition (S1305: No), the process proceeds to step S1307. Next, the storage unit 130 stores a combination of the function execution condition designated in step S1304 and the function selected in step S1306, in association with the identification number inputted in step S1302 (S1307). Here, in a case where step S1304 or step S1306 has not been executed in step S1307, the corresponding information is not updated.

Note that the screen displayed in step S1301 is, for example, Display screen SC1 shown in Fig. 12A. Furthermore, the screen displayed in step S1302 is, for example, Display screen SC2 shown in Fig. 12A, while the screen displayed in step S1304 is, for example, Display screens SC3 and SC4 shown in Fig. 12A and Display screens SC5 to SC8 shown in Fig. 12B. Furthermore, the screens displayed in steps S1306 and S1307 are, for example, Display screens SC9 and SC10 shown in Fig. 13.

### <<3.3. Function execution action example>>

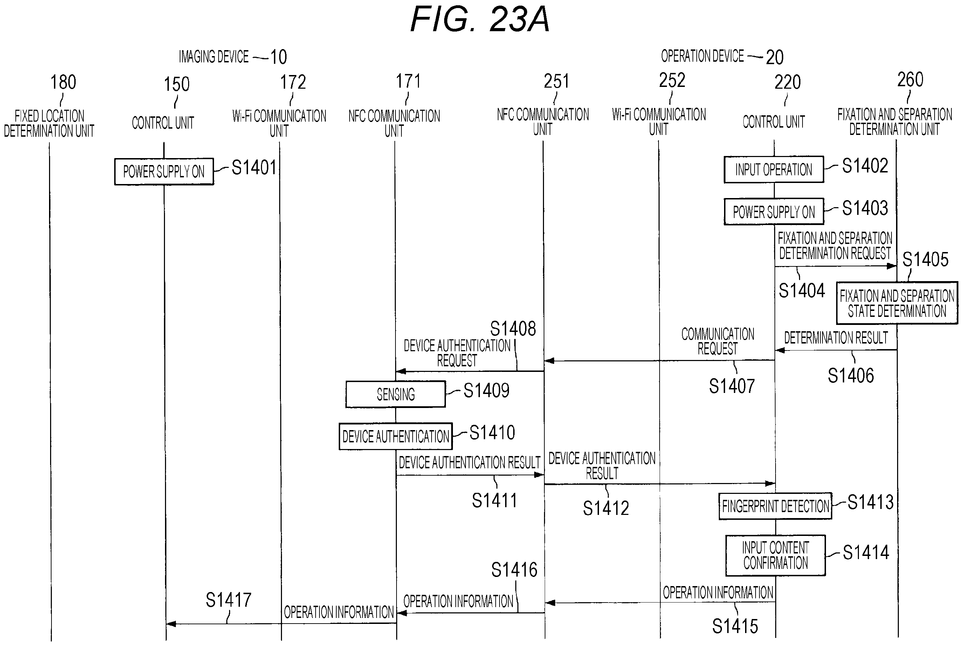

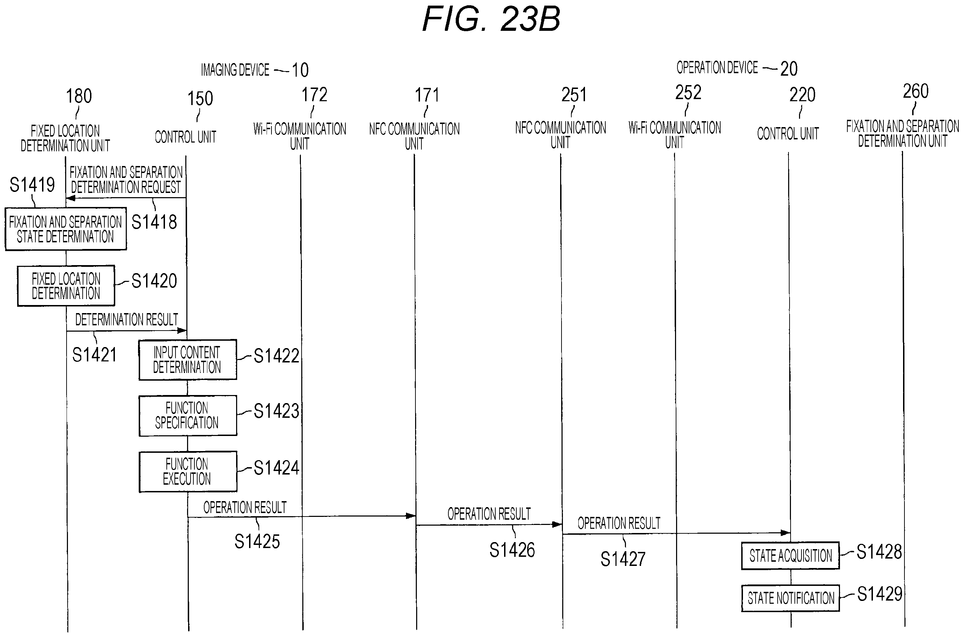

Next, with reference to Figs. 23A to 23B, a description is given to execution control of a function related to the imaging device 10, by the imaging device 10 and the operation device 20, in a case where the operation device 20 is in the fixed state, according to the present embodiment. Figs. 23A and 23B are views for explaining execution control of a function related to the imaging device 10, by the imaging device 10 and the operation device 20, according to the present embodiment.

Referring to Fig. 23A, first, the control unit 150 of the imaging device 10 turns ON power supply of the entire imaging device 10 (S1401). Next, since steps S1402 to S1417 are similar to steps S1204 to S1219 in Fig. 21A, description thereof will be omitted.

Next, referring to Fig. 23B, the control unit 150 requests the fixed location determination unit 180 to determine a fixation and separation state (S1418). Next, the fixed location determination unit 180 determines a fixation and separation state of the operation device 20 in response to the request in step S1418 (S1419), and further determines the fixed location of the operation device 20 on the imaging device 10 (S1420). Next, the fixed location determination unit 180 transmits a determination result in step S1420 to the control unit 150 (S1421). Next, the control unit 150 determines contents of an operation on the operation device 20, on the basis of the operation information transmitted in step S1407 (S1422).

Next, the control unit 150 specifies a function corresponding to a function execution condition satisfied by imaging status information (S1423). Next, the control unit 150 causes the imaging unit 110 and the output unit 160 to execute the function specified in step S1423 (S1424). Next, the control unit 150 transmits information indicating an execution result in step S1424 to the NFC communication unit 171, as information indicating an operation result (S1425). Next, the NFC communication unit 171 transmits the information indicating the operation result transmitted in step S1425, to the operation device 20 (S1426).

Next, the NFC communication unit 251 of the operation device 20 transmits the information indicating the operation result transmitted in step S1426, to the control unit 220 (S1427). Next, the control unit 220 acquires a state of the imaging device 10 on the basis of the information indicating the operation result transmitted in step S1427 (S1428). Next, the control unit 220 causes the notification unit 230 to notify of the state acquired in step S1428 (S1429), and the imaging device 10 and the operation device 20 end the actions.

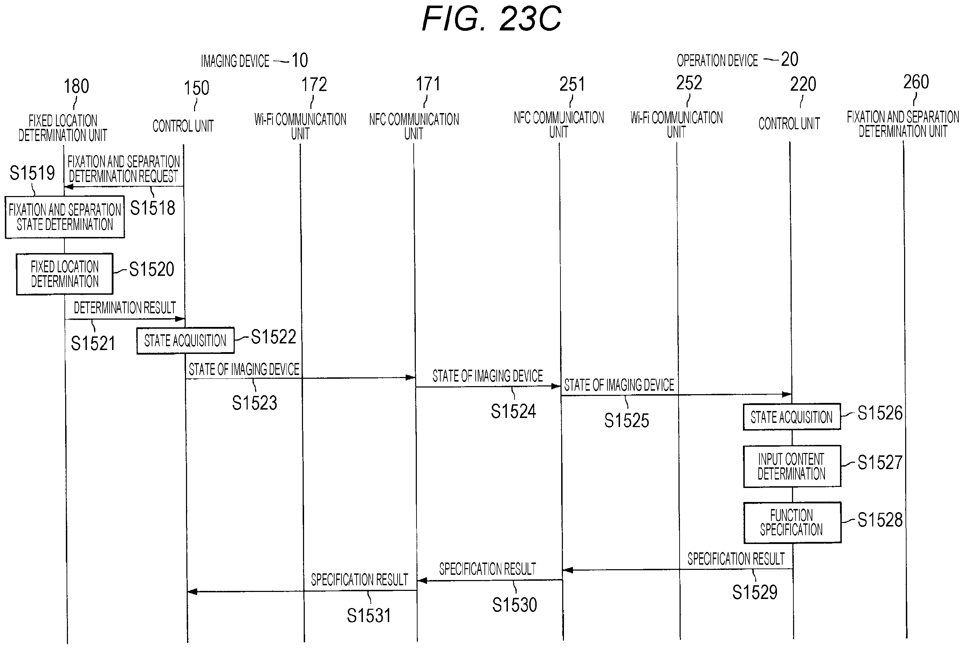

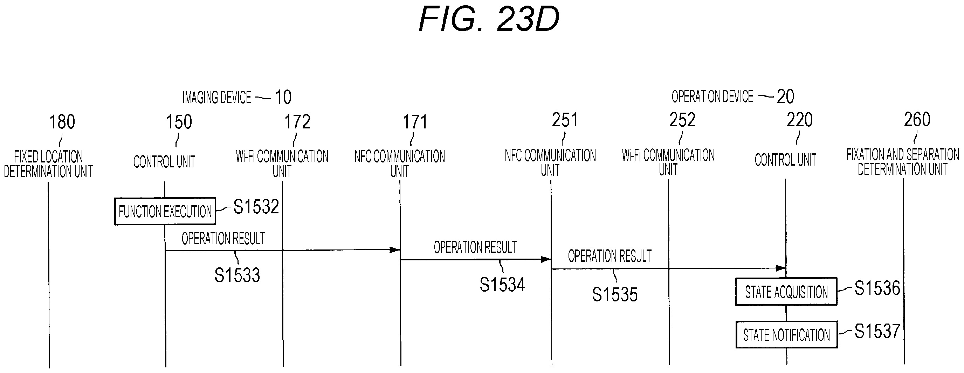

Note that the action flow shown in Figs. 23A and 23B is an example in which the control unit 150 of the imaging device 10 performs execution control of the function based on the imaging status information when the operation device 20 is operated. However, as described above, the execution control may be performed by the control unit 220 of the operation device 20. Hereinafter, with reference to Figs. 23C and 23D, a description is given to execution control by the control unit 220 of the operation device 20 in a case where the operation device 20 is in the fixed state.

Actions corresponding to step S1401 to step S1417 shown in Fig. 23A from device authentication to transmission/reception of each piece of information are similar except that the execution by the NFC communication unit 171 of the imaging device 10 and the NFC communication unit 251 of the operation device 20, and thus the description thereof will be omitted. Referring to Fig. 23C, first, since steps S1518 to S1521 are similar to steps S1418 to S1421 shown in Fig. 23B, description thereof will be omitted. Next, the control unit 150 acquires a state of the imaging device 10 (S1522). Next, the control unit 150 transmits information indicating the state of the imaging device 10 acquired in step S1522, to the NFC communication unit 171 (S1523). Next, the NFC communication unit 171 transmits the information indicating the state of the imaging device 10 transmitted in step S1523, to the operation device 20 (S1524).

Next, the NFC communication unit 251 transmits the information indicating the state of the imaging device 10 transmitted in step S1524, to the control unit 220 (S1525). Next, the control unit 220 acquires a state of the imaging device 10, from the information indicating the state of the imaging device 10 transmitted in step S1525 (S1526). Next, the control unit 220 determines contents of an operation on the operation device 20 (S1527). Next, the control unit 220 specifies a function corresponding to a function execution condition satisfied by imaging status information (S1528). Next, the control unit 220 transmits a specification result in step S1528, to the NFC communication unit 251 (S1529). Next, the NFC communication unit 251 transmits the specification result in step S1529, to the imaging device 10 (S1530). Next, the NFC communication unit 171 of the imaging device 10 transmits the specification result in step S1530, to the control unit 150 (S1531).

Referring to Fig. 23D, next, the control unit 150 causes the imaging unit 110 and the output unit 160 to execute the function specified in step S1528 (S1532). Since steps S1533 to S1538 are similar to steps S1425 to S1429 shown in Fig. 23B, description thereof will be omitted.

In this way, instead of the imaging device 10, the operation device 20 can also control to execute a function related to the imaging device 10 on the basis of the imaging status information.

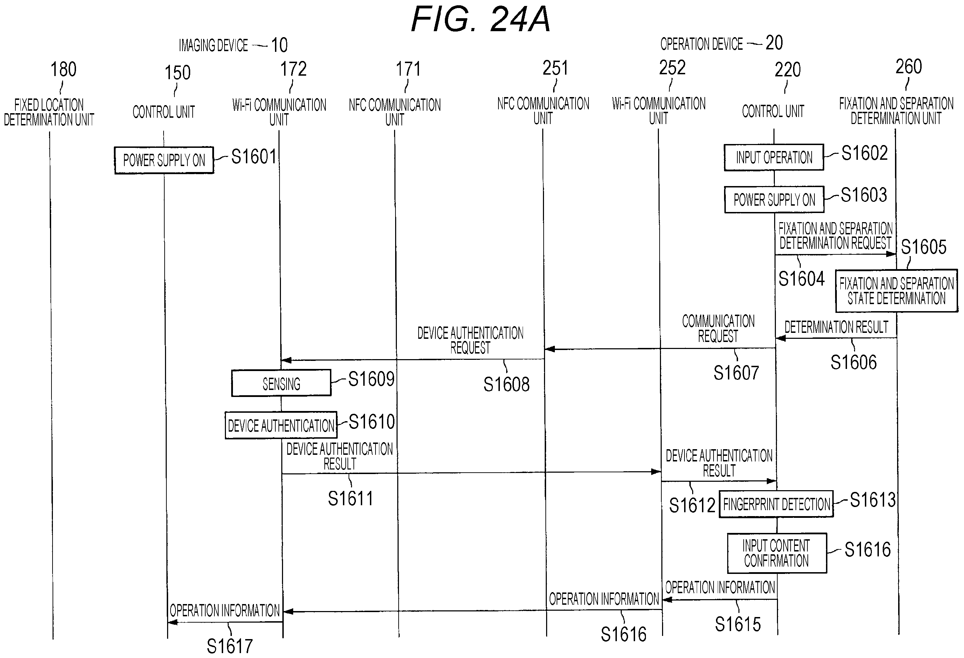

Meanwhile, the action flow described with reference to Figs. 23A to 23D is an example in a case where the operation device 20 is in the fixed state. However, alternatively, a similar action can be realized even in a case where the operation device 20 is in the separated state. Here, with reference to Figs. 24A to 24D, a description is given to execution control of a function related to the imaging device 10, by the imaging device 10 and the operation device 20, in a case where the operation device 20 is in the separated state, according to the present embodiment. Figs. 24A to 24D are views for explaining execution control of a function related to the imaging device 10, by the imaging device 10 and the operation device 20, according to the present embodiment.

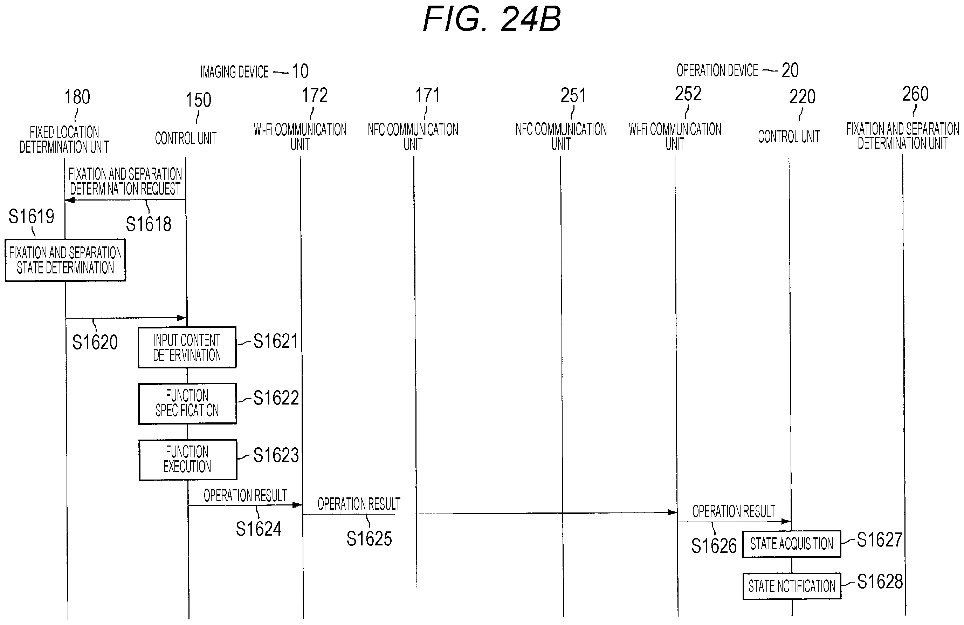

Figs. 24A and 24B show an example of an action in a case where the control unit 150 of the imaging device 10 performs execution control of a function related to the imaging device 10 when the operation device 20 is operated. In Figs. 24A and 24B, step S1601 to step S1629 are similar to steps S1401 to S1429 shown in Figs. 23A and 23B, except that the Wi-Fi communication unit 172 of the imaging device 10 and the Wi-Fi communication unit 252 of the operation device 20 execute processing by the NFC communication unit 171 of the imaging device 10 and the NFC communication unit 251 of the operation device 20, and thus the description thereof will be omitted.

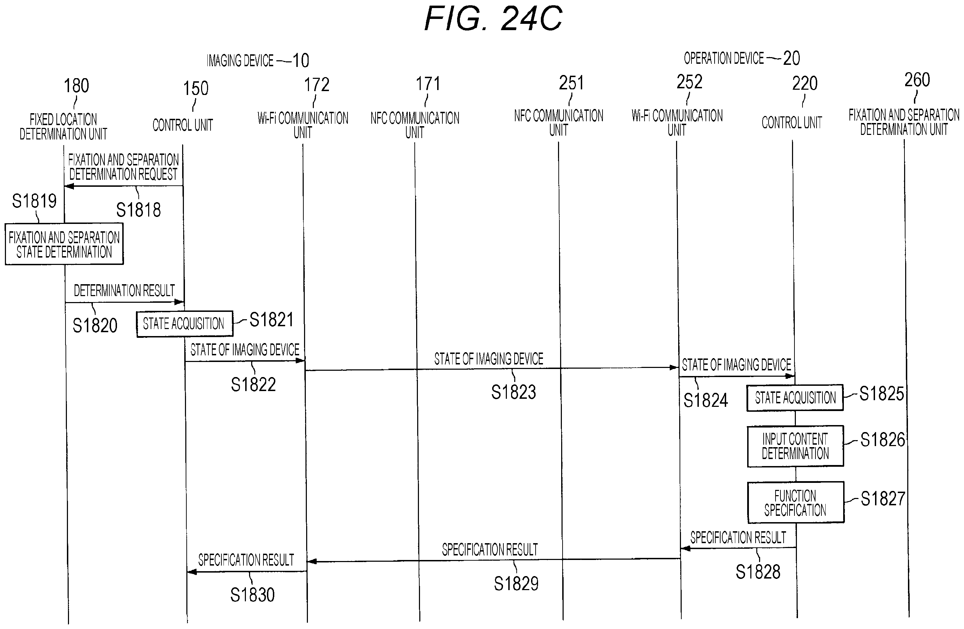

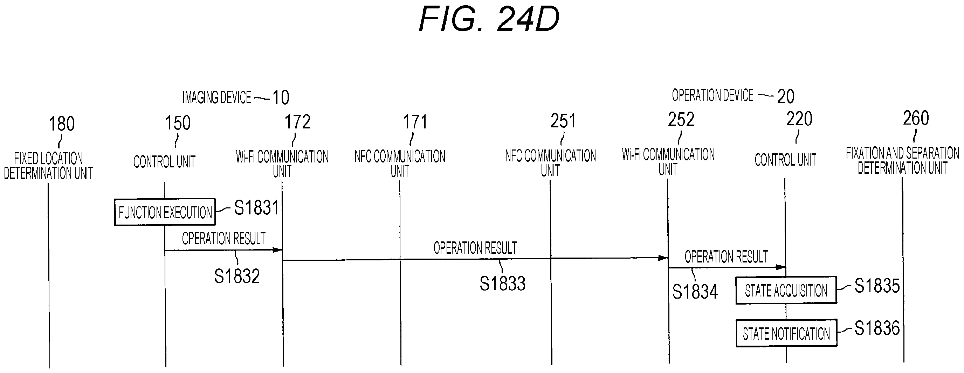

Figs. 24C and 24D show an example of an action in a case where the control unit 220 of the operation device 20 performs execution control of a function related to the imaging device 10 when the operation device 20 is operated. In Figs. 24C and 24D, step S1818 to step S1836 are similar to steps S1518 to S1537 shown in Figs. 23C and 23D except that the Wi-Fi communication unit 172 of the imaging device 10 and the Wi-Fi communication unit 252 of the operation device 20 execute processing by the NFC communication unit 171 of the imaging device 10 and the NFC communication unit 251 of the operation device 20, and the determination of the fixed location is not executed, and thus the description thereof will be omitted.

As shown in Figs. 23A to 23D and 24A to 24D, by the imaging device 10 and the operation device 20 causing execution of a function related to the imaging device 10 on the basis of the imaging status information, the user need not to change the function assignment to the operation device 20 in various situations, and the imaging device 10 and the operation device 20 can be used more comfortably.

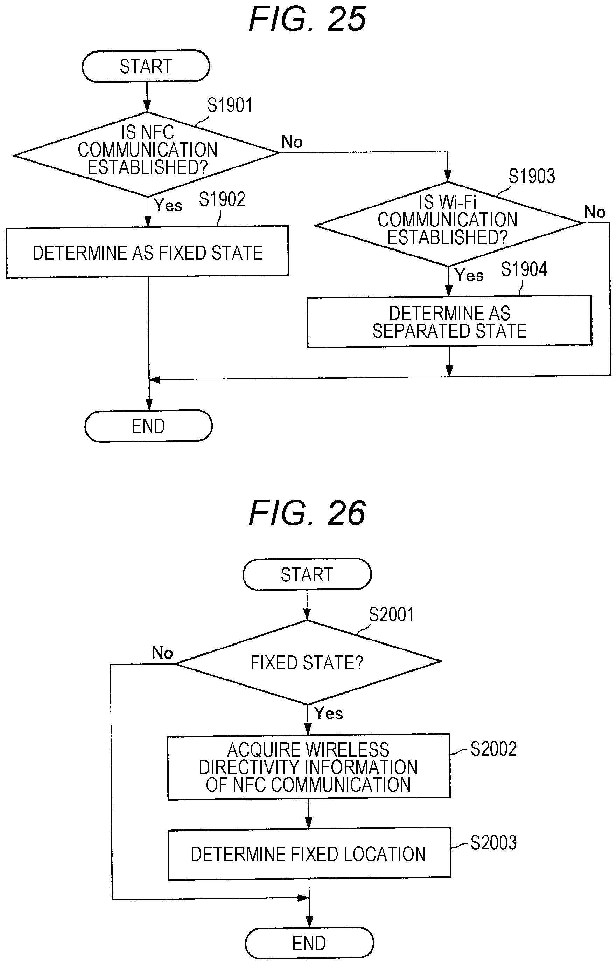

Next, with reference to Fig. 25, a description is given to an example of an action flow of state determination of the operation device 20 by the fixed location determination unit 180 in function specification according to the present embodiment. Fig. 25 is a flowchart for explaining an example of an action flow of the state determination of the operation device 20 in function specification according to the present embodiment.

Referring to Fig. 25, first, in a case where the NFC communication unit 171 establishes communication with the operation device 20 by the NFC system (S1901: Yes), the fixed location determination unit 180 determines that the operation device 20 is in the fixed state (S1902), and the fixed location determination unit 180 ends the action. Whereas, in a case where the NFC communication unit 171 has not established communication with the operation device 20 by the NFC system (S1901: No), and communication with the operation device 20 is established by the Wi-Fi communication unit 172 by the Wi-Fi system (S1903: Yes), the fixed location determination unit 180 determines that the operation device 20 is in the separated state (S1904), and the fixed location determination unit 180 ends the action.

Whereas, in a case where the Wi-Fi communication unit 172 has not established communication with the operation device 20 by the Wi-Fi system (S1903: No), the fixed location determination unit 180 suspends the determination of the state of the operation device 20, and the fixed location determination unit 180 ends the action.

Note that, in a case where the fixed location determination unit 180 determines the state of the operation device 20 on the basis of information other than the communication system in which communication with the operation device 20 is established, for example, information indicating whether or not the operation device 20 is electrically engaged with the imaging device 10, it is not necessary to execute the action shown in Fig. 25.

Next, with reference to Fig. 26, a description is given to an example of an action flow of a determination process for a fixed location of the operation device 20 on the imaging device 10 by the fixed location determination unit 180 according to the present embodiment. Fig. 26 is a flowchart for explaining an example of an action flow of the determination process for the fixed location of the operation device 20 on the imaging device 10 by the fixed location determination unit 180 according to the present embodiment.

Referring to Fig. 26, first, in a case where the operation device 20 is in the fixed state (S2001: Yes), the fixed location determination unit 180 acquires information indicating wireless directivity in NFC communication (S2002). Next, the fixed location determination unit 180 determines a fixed location of the operation device 20 on the imaging device 10, on the basis of the information indicating the wireless directivity acquired in step S2002 (S2003), and the fixed location determination unit 180 ends the action. Whereas, in a case where the operation device 20 is not in the fixed state (S2001: No), the fixed location determination unit 180 ends the action without determining the fixed location of the operation device 20 on the imaging device 10.

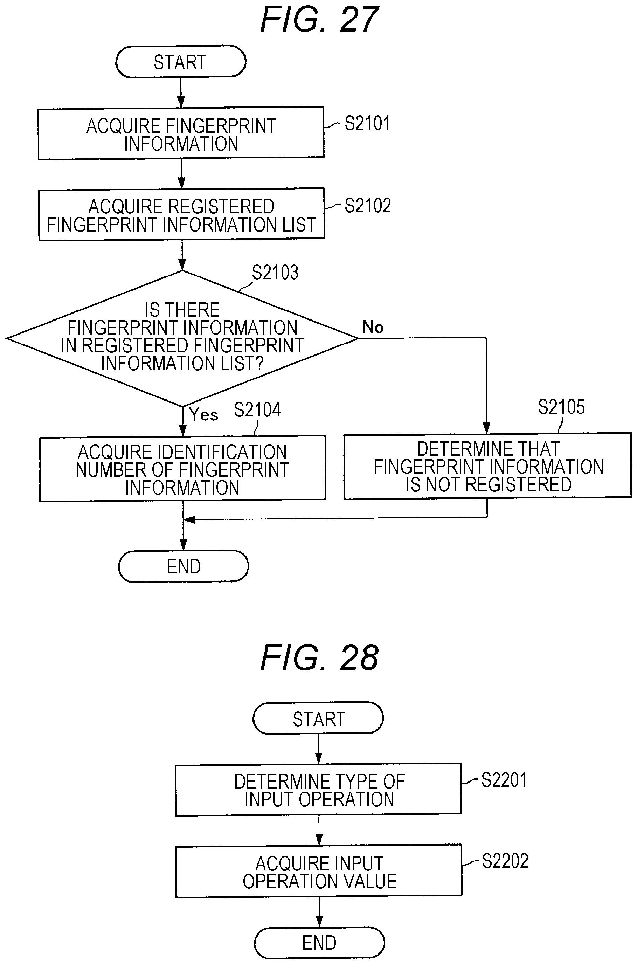

Next, with reference to Fig. 27, a description is given to an example of an action flow of a fingerprint information confirmation process by the control unit 150 according to the present embodiment. Fig. 27 is a flowchart for explaining an example of an action flow of the fingerprint information confirmation process by the control unit 150 according to the present embodiment.

Referring to Fig. 27, first, the control unit 150 acquires fingerprint information transmitted from the operation device 20 (S2101). Next, the control unit 150 acquires a list of registered fingerprint information from the storage unit 130 (S2102). In a case where the list acquired in step S2102 has finger print information that is substantially the same as the fingerprint information acquired in step S2101 (S2103: Yes), the control unit 150 acquires an identification number of the fingerprint information that is substantially the same (S2104), and the control unit 150 ends the action. Whereas, in a case where fingerprint information substantially the same as the fingerprint information acquired in step S2101 does not exist in the list acquired in step S2102 (S2103: No), the control unit 150 determines that the fingerprint information acquired in step S2101 is not registered in the list, and the control unit 150 ends the action.

Next, with reference to Fig. 28, a description is given to an action flow of receiving, by the control unit 150, an input operation on the input unit 210 of the operation device 20 according to the present embodiment. Fig. 28 is a flowchart for explaining an action flow of receiving, by the control unit 150, an input operation on the input unit 210 of the operation device 20 according to the present embodiment.

Referring to Fig. 28, first, the control unit 150 determines a type of an input operation received by the input unit 210 of the operation device 20 (S2201). Next, the control unit 150 acquires an input value of the input operation received by the input unit 210 of the operation device 20 (S2202), and the control unit 150 ends the action.

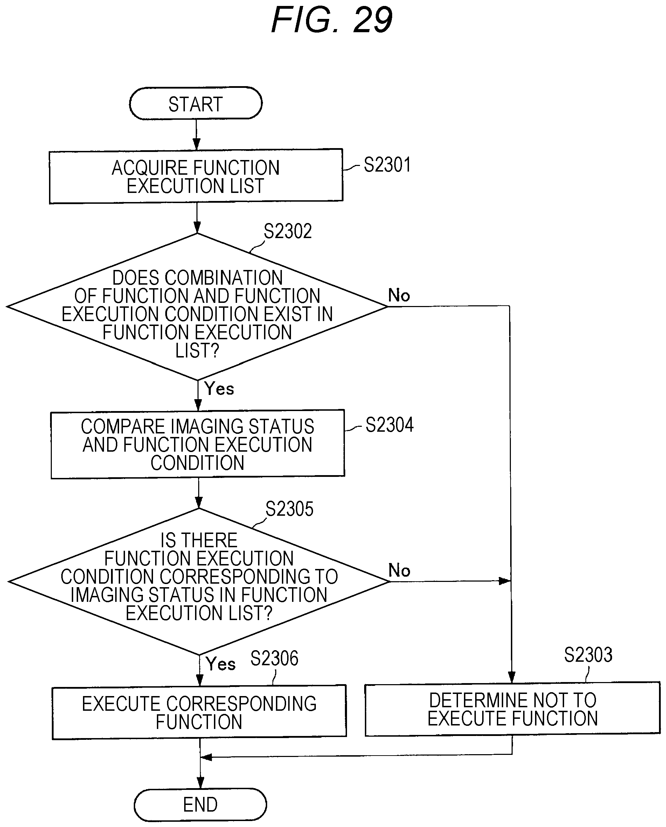

Next, with reference to Fig. 29, a description is given to an example of an action flow of executing, by the control unit 150, a function that is related to the imaging device 10 and based on imaging status information according to the present embodiment. Fig. 29 is a flowchart for explaining an example of an action flow of executing, by the control unit 150, a function that is related to the imaging device 10 and based on imaging status information according to the present embodiment.

Referring to Fig. 29, first, the control unit 150 acquires a list (function execution list) of combinations of function execution conditions and functions related to the imaging device 10, from the storage unit 130 (S2301). Next, in a case where the combination does not exist in the function execution list (S2302: No), the control unit 150 determines that the imaging device 10 does not execute the function (S2303), and the control unit 150 ends the action.

Whereas, in a case where the combination exists in the function execution list (S2302: Yes), the control unit 150 compares imaging status information with the combination in the function execution list (S2304). Next, in a case where there is a function execution condition that matches the imaging status information by comparison in step S2304 (S2305: Yes), the control unit 150 controls to execute the function corresponding to the function execution condition (S2306), and the control unit 150 ends the action.

Whereas, in a case where there is no function execution condition that matches the imaging status information by the comparison in step S2304 (S2305: No), the control unit 150 determines that the imaging device 10 does not execute the function (S2303), and the control unit 150 ends the action.

### <4. Application example>

Next, an application example according to the present disclosure will be described.

### <<4.1. Application example 1>>

Although the function execution control by the imaging device 10 and the operation device 20 has been described up to the above, the above technology can also be applied to a display device such as a projector that projects an image on a screen, for example.

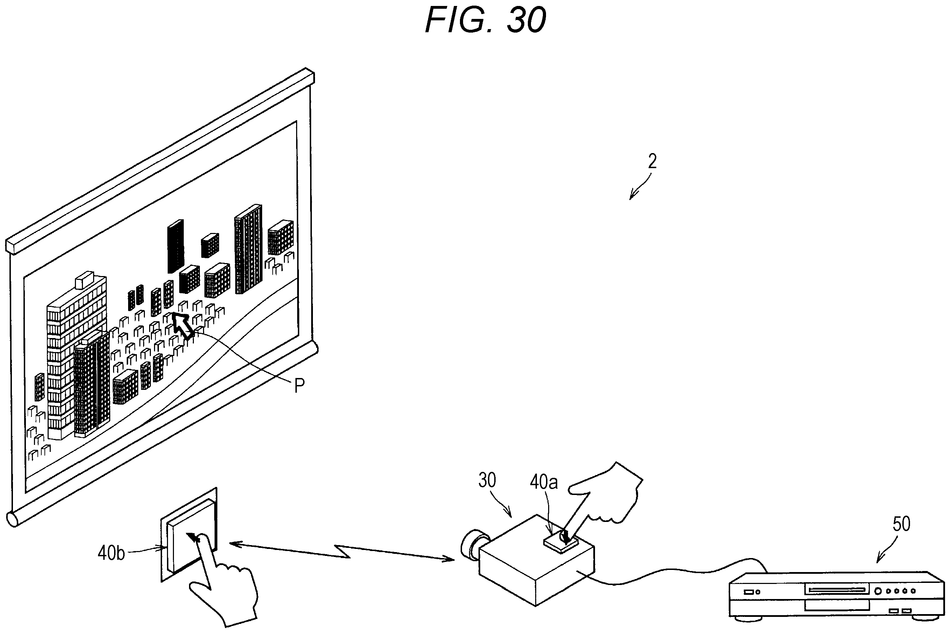

Here, a first application example according to the present disclosure will be described with reference to Fig. 30. Fig. 30 is a view for explaining an outline of the first application example according to the present disclosure. Fig. 30 shows a system 2 including a display device 30, touch panel devices 40a and 40b, and a reproducing device 50. In the system 2, the display device 30 projects image information and video information transmitted from the reproducing device 50, on the screen.

Furthermore, the imaging device 10 up to the above corresponds to the display device 30, and the operation device 20 corresponds to the touch panel device 40. Note that the touch panel device 40a is fixed to the display device 30, while the touch panel device 40b is separated from the display device 30.

For example, the display device 30 may execute a function related to the display device 30, on the basis of an input operation on the touch panel device 40 and on the basis of status information including whether the touch panel device 40 is in the fixed state or the separated state. For example, the display device 30 may execute a setting operation of the display device 30 in a case where the touch panel device 40 is in the fixed state, and may execute an operation of moving a pointer P projected on a screen in a case where the touch panel device 40 is in the separated state.

In this way, by changing the function to be executed on the basis of whether the display device 30 is in the fixed state or the separated state, it is possible to reduce the number of operating members provided in a required operation device.

### <<4.2. Application example 2>>

Furthermore, the technology described above can also be applied to a game machine. For example, by fixing the operation device to any spot on a portable game machine, it is possible to use the portable game machine by changing a way of gripping the portable game machine, an orientation of the screen, and the like.

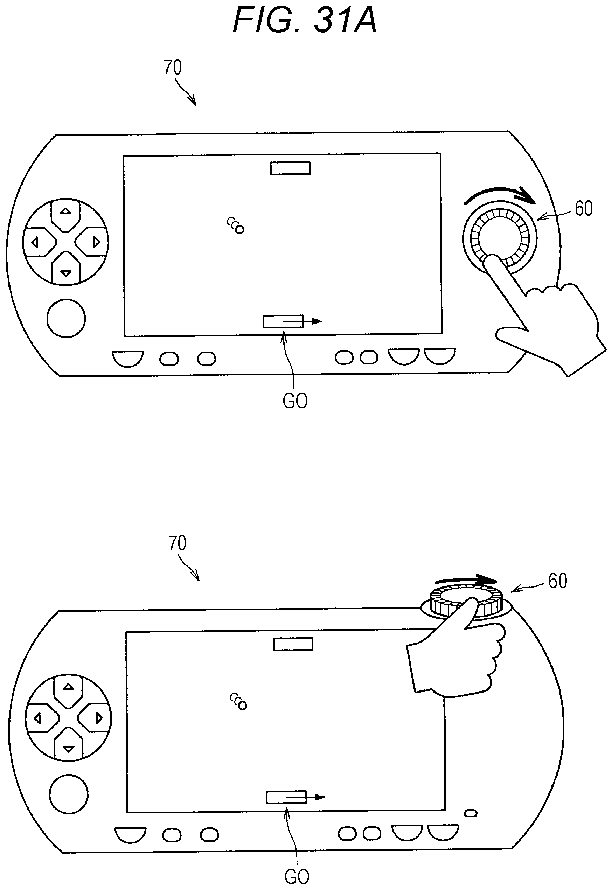

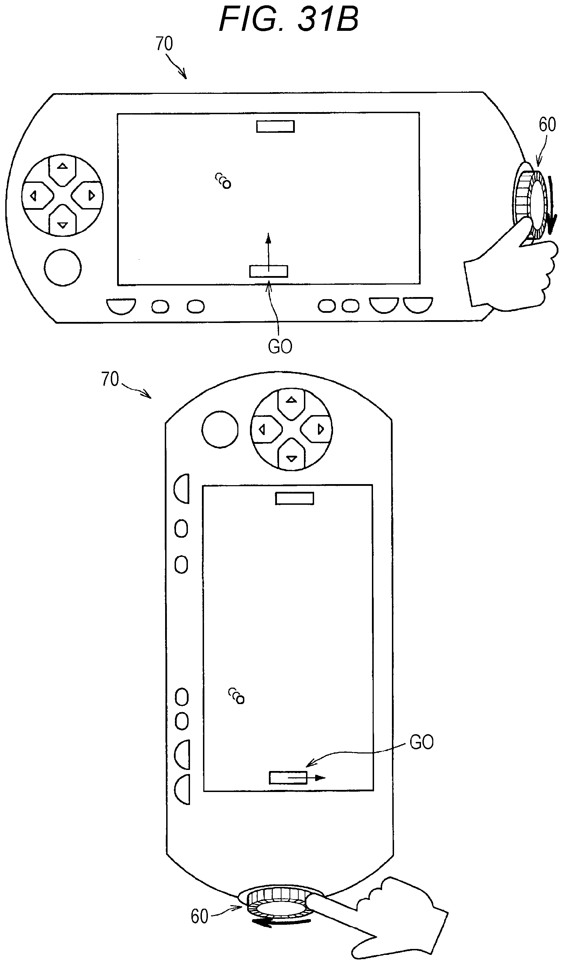

Here, a second application example according to the present disclosure will be described with reference to Figs. 31A and 31B. Figs. 31A and 31B are views for explaining an outline of the second application example according to the present disclosure. Figs. 31A and 31B show a portable game machine 70 and an operation device 60. Here, the operation device 60 is a device including a wheel dial, and can be fixed to any spot on the portable game machine 70.

As shown on an upper side of Fig. 31A, in a case where the operation device 60 is fixed to a front surface of the portable game machine 70, when the operation device 60 is operated, a game object GO on a display screen of the portable game machine 70 moves in a predetermined direction. Furthermore, as shown on a lower side of Fig. 31A, even in a case where the operation device 60 is fixed to an upper surface of the portable game machine 70, the game object GO may move in a similar direction when the operation device 60 is operated.

As shown on an upper side of Fig. 31B, in a case where the operation device 60 is fixed to a right surface of the portable game machine 70, the game object GO may move in a direction different from the example shown in Fig. 31A when the operation device 60 is operated. Furthermore, as shown on an upper side of Fig. 31B, in a case where the operation device 60 is fixed to the right surface of the portable game machine 70 and the portable game machine 70 is in a position in which the right surface is facing downward, the game object GO may move in a direction similar to the example shown in Fig. 31A when the operation device 60 is operated.

In this way, by changing a behavior in the game when the operation input is performed on the basis of which spot on the game machine the operation device is fixed to, it is possible to expand a range of ways to play while maintaining operability.

Note that, in the above description, an example in which the operation device 60 is fixed to the portable game machine 70 has been described. However, needless to say that, in a case where the operation device 60 is separated from the portable game machine 70, a behavior in the game when the operation device 60 is operated may change.

In addition to the application examples given up to the above, a similar technology can also be applied to, for example, a music player. For example, by performing track forward and volume adjustment operations with an operation device in the separated state, which is lighter and smaller than a music player, it is no longer necessary to take out a music player body from a bag or a pocket and operate every time, which can reduce a burden on the user.

### <5. Hardware configuration example>

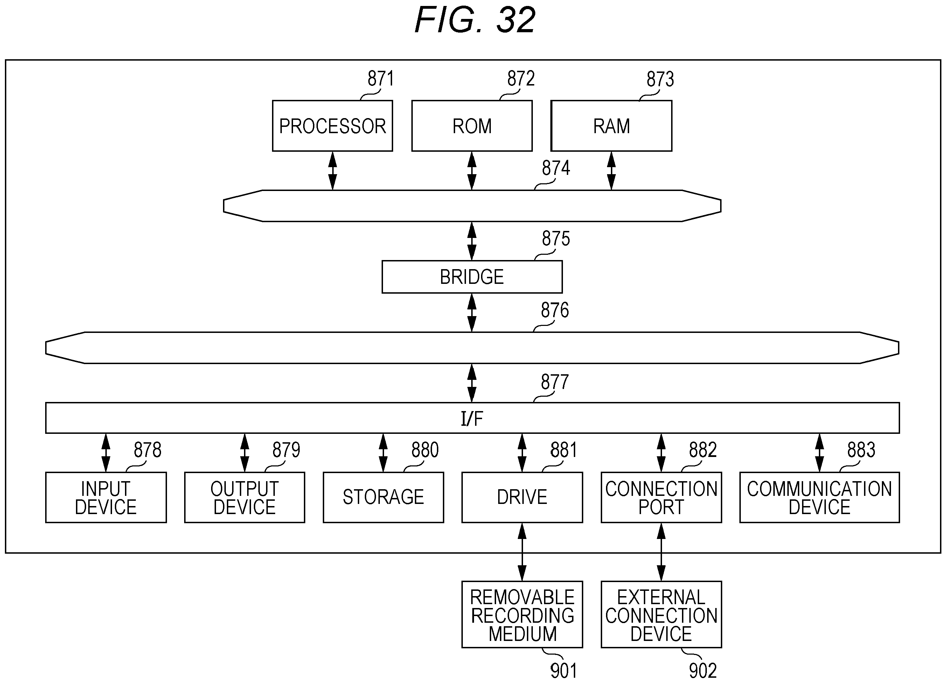

Next, a description is given to a hardware configuration example common to the imaging device 10 and the operation device 20 according to the embodiment of the present disclosure. Fig. 32 is a block diagram showing a hardware configuration example of the imaging device 10 and the operation device 20 according to the embodiment of the present disclosure. Referring to Fig. 32, the imaging device 10 and the operation device 20 include, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration illustrated here is an example, and some of the components may be omitted. Furthermore, components other than the components illustrated here may be further included.

### (Processor 871)

The processor 871 functions as, for example, an arithmetic processing device or a control device, and controls the all of or a part of an action of each component on the basis of various programs recorded in the ROM 872, the RAM 873, the storage 880, or a removable recording medium 901.

### (ROM 872, RAM 873)

The ROM 872 is means that stores a program to be read by the processor 871, data to be used for calculation, and the like. The RAM 873 temporarily or permanently stores, for example, a program to be read into the processor 871 and various parameters that change as appropriate when the program is executed, and the like.

### (Host bus 874, bridge 875, external bus 876, interface 877)

The processor 871, the ROM 872, and the RAM 873 are connected to each other via, for example, the host bus 874 capable of high-speed data transmission. Whereas, the host bus 874 is connected to the external bus 876 having a relatively low data transmission speed via the bridge 875, for example. Furthermore, the external bus 876 is connected to various components via the interface 877.

### (Input device 878)

As the input device 878, for example, a mouse, a keyboard, a touch panel, a button, a switch, a lever, and the like are used. Moreover, as the input device 878, a remote controller capable of transmitting a control signal (hereinafter referred to as a remote controller) by using infrared rays or other radio waves may be used. Furthermore, the input device 878 includes a voice input device such as a microphone.

### (Output device 879)

The output device 879 is, for example, a device capable of visually or audibly notifying a user of acquired information, such as a display device such as a cathode ray tube (CRT), an LCD, or an organic EL, an audio output device such as a speaker or a headphone, a printer, a mobile phone, or a facsimile. Furthermore, the output device 879 according to the present disclosure includes various vibration devices that can output a tactile stimulus.

### (Storage 880)

The storage 880 is a device to store various data. As the storage 880, for example, there is used a magnetic storage device such as a hard disk drive (HDD), a semiconductor storage device, an optical storage device, a magneto-optical storage device, or the like.

### (Drive 881)

The drive 881 is a device that reads information recorded on the removable recording medium 901 such as a magnetic disk, an optical disk, a magneto-optical disk, or a semiconductor memory, for example, or writes information to the removable recording medium 901.

### (Removable recording medium 901)

The removable recording medium 901 is, for example, DVD media, Blu-ray (registered trademark) media, HD DVD media, various semiconductor storage media, and the like. Of course, the removable recording medium 901 may be, for example, an IC card mounted with a non-contact IC chip, an electronic device, or the like.

### (Connection port 882)

For example, the connection port 882 is a port to connect an external connection device 902, such as a universal serial bus (USB) port, an IEEE1394 port, a small computer system interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication device 883)

The communication device 883 is a communication device to connect to a network, and for example, a communication card for wired or wireless LAN, Bluetooth (registered trademark) or wireless USB (WUSB), a router for optical communication, a router for asymmetric digital subscriber line (ADSL), a modem for various communications, or the like.

### <6. Conclusion>

The imaging device 10 and the operation device 20 described above can cause execution of a function that is related to the imaging device and corresponds to an imaging status including whether the operation device is fixed to the imaging device or separated from the imaging device when an operation is performed on the removable operation device, and enable the imaging device to function in the manner desired by the user.

The preferred embodiment of the present disclosure has been described above in detail with reference to the accompanying drawings, but the technical scope of the present disclosure is not limited to such examples. It is obvious that those with ordinary skill in the technical field of the present disclosure can arrive various variations or modifications within the scope of the technical idea described in the claims, and it is naturally understood that these also fall within the technical scope of the present disclosure.

Furthermore, the effects described in the present specification are merely exemplary or illustrative, and not restrictive. That is, the technology according to the present disclosure can exhibit other effects apparent to those skilled in the art from the description of the present specification, in addition to the effect described above or instead of the effect described above.

Note that the following configurations are also within the technical scope of the present disclosure.
(1) An information processing apparatus including:
   a control unit configured to execute a function that is related to an imaging device and associated in advance, on the basis of imaging status information including fixation and separation information and on the basis of an operation on an operation device, in which
   the operation device is in a state of either a fixed state of being fixed to the imaging device or a separated state of being separated from the imaging device, and
   the fixation and separation information indicates whether the operation device is in the fixed state or the separated state.
(2) The information processing apparatus according to (1) above, in which
   the imaging status information further includes fixed location information indicating a fixed location that is a location at which the operation device is fixed to the imaging device, and
   in a case where the fixation and separation information indicates that the operation device is in the fixed state, the control unit executes a function that is related to the imaging device and associated in advance, further on the basis of the fixed location on the imaging device indicated by the fixed location information.
(3) The information processing apparatus according to (2) above, in which
   the fixed location is a relative location with respect to the imaging device, and
   in a case where the fixation and separation information indicates that the operation device is in the fixed state, the control unit executes a function that is related to the imaging device and associated in advance, further on the basis of a relative location with respect to the imaging device indicated by the fixed location information.
(4) The information processing apparatus according to any one of (1) to (3) above, in which
   the imaging status information further includes information indicating a state of the imaging device.
(5) The information processing apparatus according to (4) above, in which
   a state of the imaging device further includes a position of the imaging device.
(6) The information processing apparatus according to any one of (1) to (5) above, in which
   the imaging status information further includes biometric information of a user.
(7) The information processing apparatus according to (6) above, in which
   biometric information of the user includes fingerprint information of the user.
(8) The information processing apparatus according to (7) above, in which the fingerprint information of the user includes information indicating which finger of the user a fingerprint is of.
(9) The information processing apparatus according to any one of (1) to (8) above, in which
   the imaging status information further includes information indicating a type of the operation device.
(10) The information processing apparatus according to any one of (1) to (9) above, in which
   the information processing apparatus is the imaging device.
(11) The information processing apparatus according to (10) above, in which
   in a case where there is a plurality of the operation devices, the control unit executes a function that is related to the imaging device and associated in advance, further on the basis of which of the operation devices an operation is performed on, among the plurality of the operation devices.
(12) The information processing apparatus according to (10) above, in which
   in a case where an operation is performed on any of the operation devices among the plurality of operation devices, the control unit executes a function that is related to the imaging device and associated in advance, further on the basis of the imaging status information and an operation on the any of the operation devices.
(13) The information processing apparatus according to any one of (1) to (9) above, in which
   the information processing apparatus is the operation device.
(14) The information processing apparatus according to (13) above, further including:
   a notification unit configured to cause a user to be notified of an execution result of a function related to the imaging device, the execution result being made by the imaging device.
(15) The information processing apparatus according to any one of (1) to (14) above, further including:
   a fixation and separation determination unit configured to determine whether the operation device is in the fixed state or the separated state.
(16) The information processing apparatus according to any one of (1) to (15) above, further including:
   a communication unit configured to execute communication by a communication system corresponding to the fixed state or the separated state of the operation device.
(17) An information processing system including:
   a control unit configured to execute a function that is related to an imaging device and associated in advance, on the basis of imaging status information including a fixation and separation state and on the basis of an operation on an operation device;
   a notification unit configured to notify a user of execution of a function related to the imaging device, the execution being made by the imaging device; and
   a fixation and separation discrimination unit configured to determine whether the operation device is in a fixed state of being fixed to the imaging device or a separated state of being separated from the imaging device, in which
   the operation device is in a state of either the fixed state or the separated state.

### REFERENCE SIGNS LIST

- 10: Imaging device
- 110: Imaging unit
- 120: Image processing unit
- 130: Storage unit
- 140: Input unit
- 150: Control unit
- 160: Output unit
- 170: Communication unit
- 171: NFC communication unit
- 172: Wi-Fi communication unit
- 180: Fixed location determination unit
- 20: Operation device
- 210: Input unit
- 220: Control unit
- 230: Notification unit
- 240: Output unit
- 250: Communication unit
- 251: NFC communication unit
- 252: Wi-Fi communication unit
- 260: Fixation and separation determination unit
- 270: Storage unit

## Claims

1. An information processing apparatus comprising:
a control unit configured to execute a function that is related to an imaging device and associated in advance, on a basis of imaging status information including fixation and separation information and on a basis of an operation on an operation device, wherein
the operation device is in a state of either a fixed state of being fixed to the imaging device or a separated state of being separated from the imaging device, and
the fixation and separation information indicates whether the operation device is in the fixed state or the separated state.

2. The information processing apparatus according to claim 1, wherein
the imaging status information further includes fixed location information indicating a fixed location that is a location at which the operation device is fixed to the imaging device, and
in a case where the fixation and separation information indicates that the operation device is in the fixed state, the control unit executes a function that is related to the imaging device and associated in advance, further on a basis of the fixed location on the imaging device indicated by the fixed location information.

3. The information processing apparatus according to claim 2, wherein
the fixed location is a relative location with respect to the imaging device, and
in a case where the fixation and separation information indicates that the operation device is in the fixed state, the control unit executes a function that is related to the imaging device and associated in advance, further on a basis of a relative location with respect to the imaging device indicated by the fixed location information.

4. The information processing apparatus according to claim 1, wherein
the imaging status information further includes information indicating a state of the imaging device.

5. The information processing apparatus according to claim 4, wherein
a state of the imaging device further includes a position of the imaging device.

6. The information processing apparatus according to claim 1, wherein
the imaging status information further includes biometric information of a user.

7. The information processing apparatus according to claim 6, wherein
biometric information of the user includes fingerprint information of the user.

8. The information processing apparatus according claim 7, wherein fingerprint information of the user includes information indicating which finger of the user a fingerprint is of.

9. The information processing apparatus according to claim 1, wherein
the imaging status information further includes information indicating a type of the operation device.

10. The information processing apparatus according to claim 1, wherein
the information processing apparatus is the imaging device.

11. The information processing apparatus according to claim 10, wherein
in a case where there is a plurality of the operation devices, the control unit executes a function that is related to the imaging device and associated in advance, further on a basis of which of the operation devices an operation is performed on, among the plurality of the operation devices.

12. The information processing apparatus according to claim 10, wherein
in a case where an operation is performed on any of the operation devices among the plurality of operation devices, the control unit executes a function that is related to the imaging device and associated in advance, on a basis of the imaging status information and an operation on the any of the operation devices.

13. The information processing apparatus according to claim 1, wherein
the information processing apparatus is the operation device.

14. The information processing apparatus according to claim 13, further comprising:
a notification unit configured to cause a user to be notified of an execution result of a function related to the imaging device, the execution result being made by the imaging device.

15. The information processing apparatus according to claim 1, further comprising:
a fixation and separation determination unit configured to determine whether the operation device is in the fixed state or the separated state.

16. The information processing apparatus according to claim 1, further comprising:
a communication unit configured to execute communication by a communication system corresponding to the fixed state or the separated state of the operation device.

17. An information processing system comprising:
a control unit configured to execute a function that is related to an imaging device and associated in advance, on a basis of imaging status information including fixation and separation information and on a basis of an operation on an operation device;
a notification unit configured to cause a user to be notified of execution of a function related to the imaging device, the execution being made by the imaging device; and
a fixation and separation determination unit configured to determine whether the operation device is in a fixed state of being fixed to the imaging device or a separated state of being separated from the imaging device, wherein
the operation device is in a state of either the fixed state or the separated state.
